# EUROPÄISCHE PATENTSCHRIFT

(11) **EP 3 768 460 B1**
(45) Veröffentlichungstag und Bekanntmachung des Hinweises auf die Patenterteilung: **01.05.2024**
(21) Anmeldenummer: 19712566.9
(22) Anmeldetag: 19.03.2019
(51) Int. Cl.: B23K 26/06, B23K 26/064, B23K 26/062, B23K 26/0622, B23K 26/08, B23K 26/082

(54) **VERFAHREN ZUR BEARBEITUNG EINES WERKSTÜCKS MITTELS BESTRAHLUNG MIT LASERSTRAHLUNG SOWIE VORRICHTUNG HIERZU**
METHOD FOR PROCESSING A WORKPIECE BY MEANS OF IRRADIATION WITH LASER RADIATION, AND DEVICE THEREFOR
PROCÉDÉ POUR USINER UNE PIÈCE PAR EXPOSITION À L'ACTION D'UN RAYONNEMENT LASER ET DISPOSITIF APPROPRIÉ

(30) Priorität: 20.03.2018 DE 102018106579
(43) Veröffentlichungstag der Anmeldung: 27.01.2021
(73) Patentinhaber: Pulsar Photonics GmbH, 52134 Herzogenrath (DE)
(72) Erfinder: EIFEL, Stephan, 50679 Köln (DE); HOLTKAMP, Jens, 41849 Wassenberg (DE); RYLL, Joachim, 52159 Roetgen (DE)
(74) Vertreter: Patentanwälte Bauer Vorberg Kayser
(86) Internationale Anmeldenummer: PCT/EP2019/056833
(87) Internationale Veröffentlichungsnummer: WO 2019/180015

(56) Entgegenhaltungen:
- WO-A1-2013/164125
- DE-A1-102010 001 357

## Beschreibung

Die Erfindung betrifft ein Verfahren zur Bearbeitung eines Werkstücks mittels Bestrahlung mit Laserstrahlung sowie Vorrichtung hierzu entsprechend dem Oberbegriff der Ansprüche 1 und 11 (siehe z.B. WO 2013/164125 A1).

Aus dem Stand der Technik sind vielfältige gattungsgemäße Verfahren und Vorrichtungen bekannt, die auf der Verwendung von Laserstrahlung zur Bearbeitung von Werkstücken basieren. Dabei ist sowohl die Verwendung von gepulster Laserstrahlung als auch von kontinuierlicher Laserstrahlung grundsätzlich bekannt. Es hat sich im Stand der Technik als nachteilig erwiesen, Laserprozesse nur durch Erhöhung der mittleren Laserleistung im Laserprozess zu beschleunigen, ohne eine Anpassung der zeitlichen und örtlichen Verteilung der Laserstrahlung auf dem Werkstück vorzunehmen. Beispielsweise entstehen bei einem Laserabtragprozess mit gepulster Laserstrahlung durch Erhöhung der mittleren Laserleistung ohne eine Änderung der zeitlichen oder räumlichen Verteilung der Laserstrahlung Wärmeakkumulationseffekte die zu einer deutlichen Reduzierung der Bearbeitungsqualität führen oder im schlimmsten Fall zu einer Zerstörung des Werkstücks führen können.

In anderen Laserprozessen wie beispielsweise dem selektiven Laserschmelzen mit kontinuierlicher Laserstrahlung kann eine Erhöhung der mittleren Laserleistung ohne Anpassung der zeitlichen und örtlichen Verteilung der Laserstrahlung zu unerwünschten Materialverdampfungseffekten oder zu einer Minderung der Bearbeitungsqualität aufgrund zu starker Temperaturgradienten führen.

Die zeitliche und räumliche Verteilung der Laserstrahlung erfolgt typischerweise durch das Bewegen der Laserstrahlung über das Werkstück, beispielsweise durch ein Scansystem oder durch Bewegung des Werkstücks mit einem Achssystem. Die Dynamik der Scansysteme, insbesondere der Galvanometerscanner sowie der Achssysteme hat sich in den letzten Jahren allerdings zunehmend als unzureichend erwiesen, um eine hinreichende zeitliche und örtliche Verteilung der Laserstrahlung ohne qualitätsmindernde Effekt beim Bearbeitungsergebnis bei Erhöhung der mittleren Leistung in den Laserprozessen zu erzielen.

Aufgabe der vorliegenden Erfindung ist es, ein Verfahren und eine Vorrichtung zur Bearbeitung eines Werkstücks mittels Bestrahlung mit Laserstrahlung anzugeben, mit dem / der eine größere Bearbeitungsgeschwindigkeit erzielbar ist.

Gelöst wird diese Aufgabe durch ein Verfahren mit den Merkmalen des Anspruchs 11 sowie durch eine Vorrichtung mit den Merkmalen des Anspruchs 1.

Die Unteransprüche betreffen vorteilhafte Ausgestaltungen und Weiterbildungen der vorliegenden Erfindung. Die in den Unteransprüchen genannten Merkmale können in beliebiger Kombination zur Weiterbildung des erfindungsgemäßen Verfahrens sowie der erfindungsgemäßen Vorrichtung verwendet werden, soweit dies technisch möglich ist. Dies gilt auch dann, wenn derartige Kombinationen nicht explizit durch entsprechende Rückbezüge in den Ansprüchen verdeutlicht sind. Insbesondere gilt dies auch über die Kategoriegrenzen der Patentansprüche hinweg.

Eine gemäß dem Anspruch 1 ausgebildete Vorrichtung ist zum Bearbeiten eines Werkstücks durch Bestrahlen mittels Laserstrahlung ausgebildet und weist die folgenden Merkmale auf:
- eine Laserstrahlungsquelle,
- ein Aufnahmebereich zur Aufnahme eines zu bearbeitenden Werkstücks,
- eine Strahlformungseinheit, die zwischen Laserstrahlungsquelle und Aufnahmebereich in den Strahlengang der von der Laserstrahlungsquelle erzeugten Laserstrahlung eingefügt und dazu eingerichtet ist, durch lokale Modulation der Laserstrahlung zumindest zwei verschiedene vorbestimmte Intensitätsverteilungen, nämlich zumindest eine erste Intensitätsverteilung und eine zweite Intensitätsverteilung, der Laserstrahlung auf dem Werkstück zu erzeugen,
- eine Bewegungseinheit, die dazu eingerichtet ist, eine Bewegung der von der Laserstrahlungsquelle erzeugten Laserstrahlung auf einem im Aufnahmebereich angeordneten Werkstücks zu bewirken, und
- eine Steuereinheit, die sowohl die Bewegungseinheit als auch die Strahlformungseinheit ansteuert, wobei die Steuereinheit dazu eingerichtet ist, die Laserstrahlung, welche die erste Intensitätsverteilung auf dem Werkstück aufweist, entlang eines ersten Pfads über das Werkstück zu führen, und die Laserstrahlung, welche die zweite Intensitätsverteilung auf dem Werkstück aufweist, entlang eines zweiten, vom ersten Pfad verschiedenen Pfads über das Werkstück zu führen.

Die erfindungsgemäße Vorrichtung definiert weiter, dass entlang des ersten Pfads eine größere Fläche des Werkstücks mittels der Laserstrahlung bearbeitet wird als entlang des zweiten Pfads, insbesondere die zweite Fläche maximal 10% der ersten Fläche beträgt, bevorzugt weniger als 5% der ersten Fläche und besonders bevorzugt maximal 1% der ersten Fläche.

Die Erfindung basiert auf Überlegungen im Zusammenhang mit dem Einsatz von technischen Mitteln zur Strahlformung. Überraschend wurde von den Erfindern festgestellt, dass die Verwendung einer Strahlformung zur Verteilung der Laserleistung auf eine größere Fläche und damit zur Reduktion der eingebrachten Energiedichten auf dem Werkstück bei der Erhöhung der Laserleistung im Prozess zu einer Vermeidung von qualitätsmindernden Effekten führen kann. Es ergab sich, dass die Strahlformung eine effektive Möglichkeit darstellt, die Laserleistung in Laserprozessen ohne einen Verlust der gewohnten Bearbeitungsqualität zu erhöhen. Sie ermöglicht bei entsprechender Ausgestaltung eine deutliche Erhöhung der Bearbeitungsgeschwindigkeit.

Unter dem Begriff "Strahlformung" können unter anderem eine Aufteilung der Strahlung in Teilstrahlen (Strahlteilung), eine Änderung in eine beliebige zusammenhängende Intensitätsverteilung oder eine dreidimensionale Stahlformung z.B. eine axiale Multifokiverteilung oder ein Besselstrahl verstanden werden.

Sofern die bestrahlte Fläche auf dem Werkstück durch die Strahlformung vergrö-ßert wird, wird typischerweise gleichzeitig auch die räumliche Auflösung des Laserprozesses reduziert. Um diese bei der Laserbearbeitung trotz der Strahlformung im Bearbeitungsergebnis dennoch hoch zu halten, hat es sich als vorteilhaft verwiesen, die Intensitätsverteilung während des Laserprozesses zu ändern. So kann beispielsweise durch einen Wechsel von einer Intensitätsverteilung mit großer Bestrahlungsfläche auf dem Werkstück auf eine Intensitätsverteilung mit deutlich kleinerer Bestrahlungsfläche die räumliche Auflösung des Laserprozesses, z.B. die Strukturauflösung, erhöht werden. Die Intensitätsverteilung mit der kleineren Fläche bearbeitet hier dann beispielsweise feine Konturen auf dem Werkstück, während die Intensitätsverteilung mit der großen Fläche flächige Bereiche auf dem Werkstück bearbeitet. Ein Wechsel der Intensitätsverteilung im Prozess kann auch weitere Vorteile haben, so können beispielsweise ein Laserschneidprozess und ein Laserablationsprozess miteinander kombiniert werden. Für jeden Bearbeitungsprozess können so optimierte Intensitätsverteilungen (= optische Werkzeuge) definiert werden, mit denen die Bearbeitungsgeschwindigkeit erhöht werden kann.

Eine erfindungsgemäße Vorrichtung ist - wie erwähnt - zum Bearbeiten eines Werkstücks durch Bestrahlen mittels Laserstrahlung vorgesehen. Bei einem Werkstück kann es sich beispielsweise um ein Bauteil aus einem metallischen, keramischen, polymeren oder glasartigen Werkstoff handeln, z.B. einen halbleitenden Wafer zur Herstellung eines mikrostrukturierten Bauteils, einen Lagerring für ein Gleit- oder Kugellager, ein Substrat zur Herstellung eines Displays, eine Metallfolie zur Herstellung einer Maske für die Lithographie, etc.

In ihrer einfachsten Ausprägung weist eine erfindungsgemäße Vorrichtung eine Laserstrahlungsquelle, einen Aufnahmebereich zur Aufnahme eines zu bearbeitenden Werkstücks und eine Strahlformungseinheit auf, die zwischen Laserstrahlungsquelle und dem Bearbeitungsbereich in den Strahlengang der von der Laserstrahlungsquelle erzeugten Laserstrahlung eingefügt ist. Die Strahlformungseinheit ist dazu eingerichtet, durch lokale, bevorzugt örtliche Modulation der Laserstrahlung zumindest zwei verschiedene vorbestimmte Intensitätsverteilungen der Laserstrahlung auf dem Werkstück zu erzeugen.

Weiterhin ist eine Bewegungseinheit vorgesehen, die dazu eingerichtet ist, eine Bewegung der von der Laserstrahlungsquelle erzeugten Laserstrahlung auf einem im Aufnahmebereich angeordneten Werkstücks zu bewirken. Dies kann beispielsweise durch eine Steuerung des Strahlengangs der Laserstrahlung bewirkt werden oder auch durch eine Steuerung der Lage des Werkstücks relativ zum bearbeitenden Laserstrahl. Grundsätzlich handelt es sich um eine Relativbewegung von Laserstrahl und Aufnahmebereich.

Mittels einer erfindungsgemäßen Vorrichtung ist es möglich, Werkstücke sehr effizient zu bearbeiten, da sie eine Materialbearbeitung mittels zwei verschiedenen optischen Werkzeugen ohne relevante Umrüstzeiten ermöglicht. So kann beispielsweise eine erste Intensitätsverteilung auf dem Werkstück dahingehend optimiert sein, dass ein möglichst großflächiger Energieeintrag in die Oberfläche des Werkstücks erfolgt. Auf diese Weise kann beispielsweise sehr rasch ein großflächiger Materialabtrag erfolgen, wobei jedoch die erzielbaren Strukturgrößen bedingt durch die große Fläche der ersten Intensitätsverteilung recht groß sind und beispielsweise im Bereich von einigen zig bis einigen hundert Mikrometern liegen können. Ein großflächiger Energieeintrag in das Werkstück durch die erste Intensitätsverteilung erlaubt je nach Art des Laserprozesses die Verwendung von höheren mittleren Laserleistungen im Bereich von beispielsweise 10W bis 1000W, was zu einer deutlich höheren Bearbeitungsgeschwindigkeit führen kann, ohne dass qualitätsmindernde Effekte, die auf einer zu großen in das Werkstück eingebrachten Energiedichte oder Leistungsdichte beruhen, auftreten.

Indem jedoch beispielsweise nachfolgend mit einer zweiten Intensitätsverteilung, die eine deutlich kleinere Fläche einnimmt, die Oberfläche des Werkstücks bearbeitet wird, können Kanten geschärft, Ecken ausgeräumt oder filigranere Strukturen erzeugt werden. Die hier erzielbaren Strukturgrößen sind grundsätzlich nur durch das theoretische Beugungslimit begrenzt und können im Bereich von einigen Mikrometern bis unter einem Mikrometer liegen. Gegenüber der aus dem Stand der Technik vorbekannten Materialbearbeitung durch Bestrahlung mittels Laserstrahlung kann mit der erfindungsgemäßen Vorrichtung die Bearbeitungsgeschwindigkeit vervielfacht werden, wobei die erzielbaren Beschleunigungsfaktoren in Abhängigkeit von der konkreten Bearbeitungsaufgabe ohne weiteres im Bereich von 2 bis 10 liegen können.

Eine besonders hohe Flexibilität der erfindungsgemäßen Vorrichtung ergibt sich in einer bevorzugten Ausgestaltung, in der die Strahlformungseinheit einen variablen Spatial Light Modulator umfasst. Unter einem Spatial Light Modulator versteht man ein optisches Bauelement, welches die Phase und oder die Amplitude eines Laserstrahls lokal in Abhängigkeit vom Ort variiert. Aus dem Stand der Technik sind Spatial Light Modulatoren zur Durchstrahlung bekannt, die lokal eine Phasenverzögerung in einem durch den Spatial Light Modulator hindurchtretenden Laserstrahl erzeugen. Weiterhin sind Spatial Light Modulatoren bekannt, die lokal eine Amplitudenschwächung in einem durch den Spatial Light Modulator hindurchtretenden Laserstrahl erzeugen. Beide Arten von Spatial Light Modulatoren wirken als diffraktive Elemente, hinter denen sich Beugungsbilder ergeben, die von der genauen räumlichen Anordnung der verzögernden/schwächenden Bereiche abhängen.

Im Kontext der vorliegenden Erfindung sollen derartige Spatial Light Modulatoren, die als diffraktive Elemente wirken und eine vorgegebene, nicht veränderbare räumliche Verteilung der verzögernden/schwächenden Bereiche aufweisen, als Diffractive Optical Elements ("DOE") bezeichnet werden.

Weiterhin sind aus dem Stand der Technik variable Spatial Light Modulatoren bekannt, bei denen die sich im Strahlengang hinter einem solchen Modulator ergebenden Intensitätsverteilungen, im Kontext der vorliegenden Erfindung insbesondere die sich auf dem Werkstück ergebende Intensitätsverteilung, elektronisch einstellbar ist.

Auch solche variablen Spatial Light Modulator können auf einer lokal variierenden Phasenverzögerung oder/und Amplitudenschwächung basieren. In der Regel werden solche Spatial Light Modulator nicht durchstrahlt, sondern in einer Reflexionskonfiguration verwendet. Beispielhaft seien an dieser Stelle Spatial Light Modulator genannt, die auf einer Reflexion der Laserstrahlung an einer Halbleiteroberfläche basieren, vor der eine Flüssigkristallschicht angeordnet ist. Dabei können die doppelbrechenden Eigenschaften der Flüssigkristallschicht gezielt lokal eingestellt werden z.B. durch Anlegen eines elektrischen Felds über mikrostrukturierte Elektroden. Entsprechende Spatial Light Modulator werden von der Fa.

Hamamatsu unter der Bezeichnung LCOS("Liquid Crystal on Silicon")-Spatial Light Modulator vertrieben. Weiterhin sind auch transmittierende variable Spatial Light Modulator bekannt, diese werden beispielsweise von der Fa. Jenoptik unter der Bezeichnung "Flüssigkristall-Lichtmodulatoren Spatial Light Modulator-S" vertrieben.

Weiterhin seien amplitudenmodulierende variable Spatial Light Modulator genannt, die auf mikromechanischen Mikrospiegelarrays basieren. Die einzeln ansteuerbaren Mikrospiegel erlauben es, gezielt räumliche Bereiche aus dem Querschnitt eines Laserstrahls "auszublenden". Es ergibt sich ein Beugungsbild durch Beugung der einfallenden Laserstrahlung an einem "Gitter" in einer Reflexionsanordnung.

Beide Arten von variablen Spatial Light Modulator erlauben die Erzeugung von in weiten Grenzen frei vorgebbaren Intensitätsverteilungen auf dem Werkstück durch Beugung von Laserstrahlung. Vom Umfang der Erfindung ist daher die Verwendung beider Arten von variablen Spatial Light Modulator umfasst. Es stellt einen besonderen Vorteil der Verwendung eines variablen Spatial Light Modulator dar, dass mittels eines einzigen variablen Spatial Light Modulator eine Vielzahl verschiedener Intensitätsverteilungen auf dem Werkstück erzeugt werden können, zumindest aber zwei verschiedene Intensitätsverteilungen, von denen eine auch im Wesentlichen der Intensitätsverteilung der von der Laserstrahlungsquelle erzeugten Laserstrahlung entsprechen können.

Dabei ist insbesondere vorgesehen, dass der/die Spatial Light Modulator/en ortsabhängig die Phase oder/und die Intensität der auf den Spatial Light Modulator einfallenden Laserstrahlung verändert/n.

In einer Ausgestaltung ist vorgesehen, dass der/die Spatial Light Modulator so ausgebildet ist/sind, dass die Laserstrahlung durch den/die Spatial Light Modulator/en hindurchtritt.

In einer alternativen Ausgestaltung ist vorgesehen, dass der/die Spatial Light Modulator so ausgebildet ist/sind, dass die Laserstrahlung von dem/den Spatial Light Modulator/en reflektiert wird.

Insbesondere ist in einer bevorzugten Ausgestaltung vorgesehen, dass der Spatial Light Modulator eine Flüssigkristallschicht aufweist, die von der Laserstrahlung durchlaufen wird. Dabei kann der Spatial Light Modulator sowohl in durchstrahlender Geometrie als auch in reflektierender Geometrie verwendet werden, wobei letztere Konfiguration sich insbesondere bei hohen Laserleistungen als besonders vorteilhaft erwiesen hat.

Aus dem Stand der Technik sind Algorithmen bekannt, die es erlauben, eine phasen- oder/und amplitudenmodulierende Spatial Light Modulator-Struktur zu bestimmen, die in reflektierender oder durchstrahlender Geometrie in einem vorgegebenen Abstand die vorgegebene Intensitätsverteilung im auf den Spatial Light Modulator einfallenden Laserstrahl hervorrufen.

Beide Arten von Spatial Light Modulator weisen eine endliche Auflösung der ausgebildeten phasen- oder/und amplitudenvariierenden Strukturen auf. Dies hat zur Folge, dass die von einem solchen realen Spatial Light Modulator erzeugte Intensitätsverteilung von der vorgegebenen zu realisierenden Intensitätsverteilung unterscheiden. Im Stand der Technik sind iterative Verfahren bekannt, die eine schrittweise Anpassung der z.B. von einem variablen Spatial Light Modulator ausgebildeten phasen- oder/und amplitudenvariierenden Strukturen erlauben, um die vom Spatial Light Modulator erzeugte Intensitätsverteilung in möglichst große Übereinstimmung mit der vorgegebenen zu realisierenden Intensitätsverteilung zu bringen. Die Anwendung eines solchen Korrekturverfahrens ist ebenfalls Gegenstand der vorliegenden Erfindung.

Beide Arten von Spatial Light Modulator lassen sich vorteilhaft im Rahmen der vorliegenden Erfindung einsetzen. Die Verwendung eines derartigen variablen Spatial Light Modulator stellt eine erste bevorzugte Ausgestaltung der erfindungsgemäßen Vorrichtung dar.

In einer zweiten bevorzugten Ausgestaltung der vorliegenden Erfindung weist die Strahlformungseinheit einen Spatial Light Modulator auf, der zur Erzeugung einer vorbestimmten, nicht veränderbaren Intensitätsverteilung der Laserstrahlung auf dem im Aufnahmebereich angeordneten Werkstück eingerichtet ist. Eine zweite, von der ersten Intensitätsverteilung verschiedene Intensitätsverteilung auf dem Werkstück ergibt sich, wenn die Laserstrahlung durch geeignete technische Mittel am Spatial Light Modulator vorbeigeführt wird, ohne mit diesem zu interagieren.

Hierzu kann die Strahlformungseinheit eine Wechseleinheit aufweisen, die dazu eingerichtet ist, entweder den einen Spatial Light Modulator im Strahlengang der Laserstrahlung zwischen Laserstrahlungsquelle und dem Aufnahmebereich anzuordnen oder diesen mechanisch aus dem Strahlengang herauszubewegen. Hierzu kann die Wechseleinheit beispielsweise als Linearantrieb ausgebildet sein, der den Spatial Light Modulator zwischen zwei diskreten Positionen hin - und herbewegt.

In einer alternativen Ausgestaltung kann die Wechseleinheit dazu eingerichtet sein, den auf einem Drehteller angeordneten Spatial Light Modulator mittels einer Drehbewegung aus dem Strahlengang heraus und wieder hinein zu bewegen.

In einer weiteren alternativen Ausgestaltung ist die Wechseleinheit dazu eingerichtet, den Strahlengang der Laserstrahlung aktiv zu steuern, dergestalt dass sich der Spatial Light Modulator in einer ersten Position der Wechseleinheit im Strahlengang befindet und in einer zweiten Position der Wechseleinheit der Strahlengang z.B. über einen Schwenkspiegel, der mittels eines galvanometrisch angetriebenen Scanners bewegt wird, so verändert wird, dass der Laserstrahl um den Spatial Light Modulator herumgeführt wird, ohne mit diesem zu interagieren.

In einer zweiten bevorzugten Ausgestaltung der vorliegenden Erfindung weist die Strahlformungseinheit zumindest zwei Spatial Light Modulatoren auf, wobei die von den Spatial Light Modulator auf dem Werkstück erzeugten Intensitätsverteilungen vorbestimmt, nicht veränderlich und voneinander verschieden sind.

Auch in dieser zweiten bevorzugten Ausgestaltung der erfindungsgemäßen Vorrichtung kann die Strahlformungseinheit eine Wechseleinheit aufweisen, die dazu eingerichtet ist, entweder den einen Spatial Light Modulator im Strahlengang der Laserstrahlung zwischen Laserstrahlungsquelle und dem Aufnahmebereich anzuordnen, oder diesen mechanisch aus dem Strahlengang herauszubewegen und an seiner Stelle den zweiten Spatial Light Modulator in den Strahlengang hineinzubewegen.

Auch hier kann die Wechseleinheit beispielsweise als Linearantrieb ausgebildet sein, der die beiden Spatial Light Modulator zwischen zwei diskreten Positionen hin - und herbewegt.

In einer alternativen Ausgestaltung kann die Wechseleinheit dazu eingerichtet sein, den die auf einem Drehteller angeordneten Spatial Light Modulator mittels einer Drehbewegung wechselweise aus dem Strahlengang heraus und wieder hinein zu bewegen.

In einer weiteren alternativen Ausgestaltung ist die Wechseleinheit dazu eingerichtet, den Strahlengang der Laserstrahlung aktiv zu steuern, dergestalt dass sich in einer ersten Position der Wechseleinheit der erste Spatial Light Modulator im Strahlengang befindet und in einer zweiten Position der Wechseleinheit sich der zweite Spatial Light Modulator im Strahlengang befindet. Dies kann z.B. über einen Schwenkspiegel realisiert werden, der beispielsweise mittels eines galvanometrisch angetriebenen Scanners bewegt wird, wodurch der Strahlengang so gesteuert wird, dass der Laserstrahl entweder auf den ersten oder der zweiten Spatial Light Modulator trifft, wobei der Laserstrahl nicht mehr mit dem jeweils anderen Spatial Light Modulator interagiert.

In einer vorteilhaften Ausgestaltung der erfindungsgemäßen Vorrichtung erzeugt die Laserstrahlungsquelle gepulste Laserstrahlung. Typische Pulswiederholraten liegen dabei im Bereich zwischen einigen Hertz bis einigen Megahertz. Für eine effektive Materialbearbeitung hat es sich als vorteilhaft erwiesen, wenn die Pulsdauer weniger als 100 ns beträgt, bevorzugt weniger als 10ns und insbesondere weniger als 1 ns. In diesem Pulsdauerbereich überwiegen bei der Materialbearbeitung thermisch bedingte Effekte.

Wird gepulste Laserstrahlung mit einer kürzeren Pulsdauer eingesetzt, so gewinnen Effekte an Einfluss, die mit der Deposition sehr hoher Energiemengen in sehr kurzer Zeit einhergehen, d.h. mit hohen Peakleistungen. Bei diesen Effekten kann es sich insbesondere um Sublimationseffekte handeln, bei denen das Material des Werkstücks schlagartig lokal verdampft, d.h. solche Effekte, bei denen anstelle einer Materialumlagerung ein Materialabtrag erfolgt. Hier hat sich der Einsatz von gepulster Laserstrahlung mit einer Pulsdauer von weniger als 100 ps, insbesondere weniger als 10 ps und besonders bevorzugt weniger als 1 ps als vorteilhaft erwiesen. Insbesondere Pulsdauern im Bereich von einigen Hundert Femtosekunden bis zu etwa 10 ps lassen einen gezielten Materialabtrag durch Sublimation zu. Die bei zum Anmeldezeitpunkt gebräuchlichen Laserstrahlungsquellen auftretenden Pulswiederholraten liegen dabei typ. Zwischen 50 und etwa 2.000 Hz.

Zukünftig zur Verfügung stehende Laserstrahlungsquellen mit noch kürzeren Pulsdauern sind ebenfalls vorteilhaft im Zusammenhang mit der erfindungsgemäßen Vorrichtung einsetzbar.

Je nach zu lösender Bearbeitungsaufgabe kann aber auch die Verwendung von gepulster Laserstrahlung mit noch längeren Pulsdauern als den vorstehend genannten 100 ns sinnvoll sein, beispielsweise wenn bestimmte Wellenlängen für die Bearbeitungsaufgabe erforderlich sind, oder eine langsamere Energiedeposition vorteilhaft ist, beispielsweise um eine gezielte lokale Erwärmung zur Initiation einer lokalen Bearbeitungsreaktion, die auch chemischer Natur sein kann wie z.B. das Auslösen einer Polmerisationsreaktion, zu erzielen und gleichzeitig einen vorzeitigen Materialabtrag zu vermeiden.

In einer alternativen vorteilhaften Ausgestaltung der erfindungsgemäßen Vorrichtung erzeugt die Laserstrahlungsquelle kontinuierliche Laserstrahlung, d.h. bei der Laserstrahlungsquelle handelt es sich um einen Dauerstrichlaser. Dies ist insbesondere bei Verfahren vorteilhaft, bei denen das Material nicht sublimiert, sondern lediglich aufgeschmolzen werden soll z.B. bei generativen oder Fügeverfahren.

Unabhängig davon, ob die Laserstrahlungsquelle gepulste oder kontinuierliche Laserstrahlung erzeugt ist die Erfindung nicht auf bestimmte Wellenlängen beschränkt. Vielmehr können für die erfindungsgemäße Vorrichtung Laserstrahlungsquellen eingesetzt werden, die Laserstrahlung erzeugen, deren Wellenlänge im Spektrum zwischen dem tiefen UV und dem fernen Infrarot liegt. Bevorzugt liegt die Wellenlänge der eingesetzten Laserstrahlung im sichtbaren Spektralbereich bis zum nahen Infrarot.

Bevorzugt ist die Laserstrahlungsquelle dazu eingerichtet, monochromatische Laserstrahlung zu erzeugen. Je nach Bearbeitungsaufgabe können aber auch breitbandige Laserstrahlungsquellen vorteilhaft sein.

Weiterhin bevorzugt ist die Laserstrahlungsquelle dazu eingerichtet, modenreine Laserstrahlung zu erzeugen, insbesondere Laserstrahlung mit gaussförmiger Intensitätsverteilung. Besonders bevorzugt erzeugt die Laserstrahlungsquelle Laserstrahlung mit rundem Intensitätsprofil.

Bezüglich der erfindungsgemäß auf dem Werkstück zu erzeugenden Intensitätsverteilungen kann vorgesehen sein, dass sich die für die Bearbeitung des Werkstücks eingesetzten Intensitätsverteilungen auf dem Werkstück in einer Ebene quer zur Strahlachse voneinander unterscheiden, also beispielsweise in der Ebene der Oberfläche eines planen Werkstücks. Die genannte Ebene quer zum Werkstück muss jedoch nicht mit der Oberfläche des Werkstücks zusammenfallen, vielmehr kann sie auch oberhalb des Werkstücks liegen oder im Volumen des Werkstücks.

In einer bevorzugten Ausgestaltung der erfindungsgemäßen Vorrichtung weist zumindest eine von der Strahlformungseinheit auf dem Werkstück erzeugte Intensitätsverteilung der Laserstrahlung in einer Ebene quer zur Strahlachse mehrere Intensitätsmaxima auf. Besonders bevorzugt weisen diese Intensitätsmaxima im Wesentlichen identische Intensitätsverteilungen auf, die für sich einzeln betrachtet symmetrisch und insbesondere gaußförmig sein können. Insbesondere bevorzugt weisen die Maxima im Wesentlichen identische Intensitäten auf. Diese Intensitätsverteilung erlaubt eine Verteilung der in der Laserstrahlung enthaltenen Pulsenergie auf einer großen Fläche. Mittels einer derartigen Intensitätsverteilung kann daher ein optisches Werkszeug bereitgestellt werden, welches z.B. zu einem großflächigen Materialabtrag mittels Laserablation geeignet ist.

In einer bevorzugten Weiterbildung sinkt die Intensität zwischen den Maxima im Wesentlichen auf den Wert Null ab, zumindest aber auf einen Wert von nicht mehr als 25% der über alle Maxima gemittelten Intensität, bevorzugt zumindest auf einen Wert von nicht mehr als 10% der über alle Maxima gemittelten Intensität.

In einer bevorzugten Weiterbildung weist zumindest eine von der Strahlformungseinheit auf dem Werkstück erzeugte Intensitätsverteilung in einer Ebene quer zur Strahlachse mehrere Intensitätsmaxima auf, die denselben Abstand von der Strahlachse aufweisen, wobei diese Intensitätsmaxima symmetrisch um die Strahlachse verteilt sind. Diese Intensitätsverteilung erlaubt eine weitgehend homogene Einbringung der in der Laserstrahlung enthaltenen Pulsenergie in die bestrahlte Fläche des Werkstücks. Dies kann vorteilhaft sein, um eine übermäßige lokale Energiedeposition zu verhindern, welche zu einer/einem ungleichmäßigen Bearbeitungsspur bzw. Bearbeitungsergebnis oder auch zu einer unerwünschten thermisch induzierten Veränderung des Werkstücks führen könnte.

In einem alternativen Ansatz, der ggf. auch mit den vorstehend beschriebenen vorteilhaften Intensitätsverteilungen kombiniert werden kann, weist eine von der Strahlformungseinheit auf dem Werkstück erzeugte Intensitätsverteilung zumindest ein linienhaft ausgedehntes Intensitätsmaximum auf, welches eine bevorzugt geschlossene Schleife um die Strahlachse aus. Vorteilhaft liegt dabei die Schleife in einer Ebene quer zur Strahlachse, z.B. auf der Oberfläche des Werkstücks.

In einer weiteren vorteilhaften Ausgestaltung der Erfindung, die ebenfalls vorteilhaft mit den vorstehend beschriebenen vorteilhaften Intensitätsverteilungen kombiniert werden kann, weist zumindest eine von der Strahlformungseinheit auf dem Werkstück erzeugte Intensitätsverteilung ein Intensitätsminimum auf der Strahlachse auf. Insbesondere kann die Intensität der Laserstrahlung im Minimum bis auf null zurückgehen, muss dies aber nicht.

Weiterhin hat es sich als vorteilhaft erwiesen, wenn zumindest eine von der Strahlformungseinheit auf dem Werkstück erzeugte Intensitätsverteilung der Laserstrahlung nur ein Intensitätsmaximum aufweist. Um eine solche Intensitätsverteilung zu erzeugen, ist es insbesondere möglich, dass die Strahlformungsvorrichtung einen Zustand einnehmen kann, in dem der der Strahlformungsvorrichtung zugeführte Laserstrahl keinerlei strahlformenden Einflüssen unterworfen wird. So kann z.B. vorgesehen sein, dass der der Strahlformungseinheit zugeführte Laserstrahl über Spiegel an einem in der Strahlformungseinheit vorgesehenen Spatial Light Modulator vorbeigeführt wird, ohne mit diesem zu interagieren. Alternativ kann ein solcher Spatial Light Modulator mittels eines geeigneten Antriebs aus dem Strahlengang herausbewegt werden. Das Intensitätsprofil, welches sich auf dem Werkstück einstellt, entspricht dann im Wesentlichen dem Strahlprofil des von der Laserstrahlungsquelle erzeugten Laserstrahls, ggf. noch umgeformt durch im Strahlengang zwischen Laserstrahlungsquelle und Werkstück weiterhin angeordnete optische Elemente.

In einer weiteren vorteilhaften Ausgestaltung ist die Anwendung einer Intensitätsverteilung vorgesehen, die die Erzeugung einer besonders homogenen bearbeiteten Fläche auf einem Werkstück ermöglicht, wobei die zur Verfügung stehende Laserleistung besonders effektiv und in großem Umfang, bevorzugt vollständig, zur Bearbeitung eines Werkstücks eingesetzt werden kann. In dieser Ausgestaltung wird von der Strahlformungseinheit zumindest ein Intensitätsprofil auf dem Werkstück erzeugt, so das sich in einer seitlichen Projektion der Intensität auf eine entlang der Strahlachse verlaufende Ebene ein Intensitätsverlauf mit zumindest zwei randseitigen Maxima und zumindest einem, bevorzugt mehreren, dazwischen liegenden Minimum/Minima ergibt. Dies entspricht einem Sonderfall der vorstehend beschriebenen vorteilhaften Intensitätsverteilung mit mehreren isolierten Intensitätsmaxima. Zusätzliche Vorteile ergeben sich, wenn bei einer solchen Intensitätsverteilung die Intensität in der beschriebenen Projektion im Minimum/in den Minima mindestens 50% der Intensität der Maxima beträgt, bevorzugt mindestens 65% und besonders bevorzugt mindestens 80%. Eine solche Intensitätsverteilung führt zu einer weitgehend homogenen Bearbeitung des Werkstücks quer zu der gesamten Bearbeitungsspur, wenn die so geformte Laserstrahlung auf geeignete Weise über das Werkstück geführt wird. Dieses vorteilhafte Bearbeitungsergebnis kann erzielt werden, obwohl die Intensitätsverteilung verschiedene diskrete Intensitätsmaxima aufweist.

Die Verwendung eines Laserstrahls mit einer Intensitätsverteilung, die mehrere diskrete, d.h. räumlich voneinander abgegrenzte Intensitätsmaxima, aufweist, zur Bearbeitung eines Werkstücks, kann es erlauben, die gesamte zur Verfügung stehende Laserenergie zur Bearbeitung des Werkstücks einzusetzen. Die Zerlegung der Intensität in eine Mehrzahl von diskreten Intensitätsmaxima ermöglicht es, die zur Bearbeitung des Werkstücks zur Verfügung stehende Laserleistung auf eine größere Fläche zu verteilen. Damit können vor allem Wärmeakkumulationseffekte im Werkstück deutlich reduziert oder vermieden werden, die aufgrund zu hoher eingebrachter örtlicher Energiedichte in das Werkstück zu einer starken Qualitätsminderung des Bearbeitungsergebnisses führen können. Zugleich wird die Ausbildung eines Maximums mit sehr hoher Peakintensität vermieden. Wird, wie dies bis heute im Stand der Technik üblich ist, mit einer Intensitätsverteilung gearbeitet, die im Wesentlichen nur ein zentrales Intensitätsmaximum aufweist und durch Abbildung des Strahlprofils der von der Laserstrahlungsquelle erzeugten Laserstrahlung entsteht, so muss die Laserleistung so gesteuert werden, dass auch in dem einen Intensitätsmaximum die Zerstörschwelle des Werkstücks oder die Schwelle bei der Wärmeakkumulationseffekte die Qualität der Bearbeitung stark beeinflussen sicher nicht erreicht wird/werden. Unter Wärmeakkumulationseffekten versteht man hierbei beispielweise im Bereich des Laserabtrags die zeitliche Akkumulation von der im Werkstück verbleibenden Laserenergie, die nicht zum Materialabtrag genutzt wird, über eine Vielzahl von Laserpulsen.

Diese oben genannten Effekte führen in der Praxis dazu, dass bei der Bearbeitung eines Werkstücks mittels Laserstrahlung nur ein Bruchteil der von der Laserstrahlungsquelle bereitgestellten Laserleistung tatsächlich zur Bearbeitung des Werkstücks eingesetzt werden kann.

Im Stand der Technik werden zum Anmeldezeitpunkt der vorliegenden Erfindung verschiedentlich Untersuchungen angestellt, ob es möglich ist, anstelle eines in der Regel gaußförmigen Strahlprofils mit einem zentralen Intensitätsmaximum ein Strahlprofil zu verwenden, welches eine möglichst konstante Intensität über den Strahlquerschnitt aufweist. Dabei kann der Strahlquerschnitt insbesondere kreisförmig oder elliptisch sein. Ein solches Strahlprofil wird auch als "Top-Hat"-Strahlprofil bezeichnet. Es ist bekannt, dass ein Top-Hat-Strahlprofil beispielsweise mittels eines refraktiven Elements erzeugt werden kann, z.B. mittels eines Glaselements mit geeigneter Formgebung. Allerdings hat sich in der Praxis erwiesen, dass derartige refraktive Elemente sehr empfindlich auf die relative Lage von Laserstrahl und refraktivem Element reagieren, so dass ihre Verwendung eine sehr hohe Justagegenauigkeit erfordert. Weiterhin weisen die durch refraktive Elemente hergestellten Top-Hat-Strahlprofile eine starke Änderung der Intensitätsverteilung entlang der Strahlachse im Bereich des zu bearbeitenden Werkstücks auf, die eine stabile Prozessführung bei einer typischen leicht schwankenden Fokuslage auf dem Werkstück deutlich erschwert. Die standardmäßige Verwendung refraktiver Elemente zur Erzeugung eines Top-Hat-Strahlprofils bei der Materialbearbeitung mittels Laserstrahlung steht daher bislang noch aus, insbesondere, sofern höhere Bearbeitungsgenauigkeiten im Bereich von einigen bis einigen zig Mikrometern gefordert sind.

Hier hilft die Verwendung einer vorstehend beschriebenen Intensitätsverteilung mit mehreren diskreten Intensitätsmaxima, die über den Strahlquerschnitt verteilt sind, weiter. Dieser Aspekt, der eine vorteilhafte Verwendung der genannten Intensitätsverteilung in der Materialbearbeitung mittels Laserstrahlung darstellt, ist nicht nur im Kontext der vorliegenden Erfindung vorteilhaft, vielmehr stellt er eine eigenständige Erfindung dar. Der Anmelder behält sich daher vor, auf Basis der vorliegenden Unterlagen einen eigenständigen Schutz für diesen im Zusammenhang mit der vorliegenden Anmeldung als "kompakte Multistrahlverteilung" bezeichneten Aspekt anzustreben. Unter dem Schlagwort "kompakte Multistrahlverteilung" werden alle in der vorliegenden Anmeldung angesprochenen Aspekte und technischen Merkmale verstanden, die sich auf Intensitätsverteilungen beziehen, die eine Mehrzahl von Intensitätsmaxima aufweisen.

Es sei darauf hingewiesen, dass diese Maxima nicht zwangsläufig jeweils ein gaußförmiges Intensitätsprofil aufweisen müssen. Vielmehr können sie praktisch jede denkbare, technisch vorteilhafte Form haben, z.B. können sie jeweils torusförmig sein.

In einer weiteren vorteilhaften Ausgestaltung der Erfindung ist eine erfindungsgemäße Vorrichtung zum Bearbeiten eines Werkstücks mit vorgegebenen Eigenschaften mittels gepulster Laserstrahlung eingerichtet. Dabei wird zumindest eine Intensitätsverteilung dergestalt gewählt, dass während der gesamten Pulsdauer und innerhalb des gesamten Strahlquerschnitts im Wesentlichen kein lokales Aufschmelzen oder keine ungewollte thermische Veränderung des Werkstücks auftritt. Hierzu sind die optischen und thermischen Eigenschaften des Werkstücks ebenso zu berücksichtigen wie die Eigenschaften der gepulsten Laserstrahlung wie Wellenlänge, Pulsdauer und Pulsenergie.

In einer Weiterentwicklung wird neben der Wirkung der von einem Laserpuls eingebrachten optischen Energie auf das Werkstück zusätzlich die Akkumulation der Energie der Pulse über mehrere aufeinanderfolgende Laserpulse berücksichtigt.

In einer ergänzenden Weiterentwicklung wird darüber hinaus bei der Bestimmung der Wirkung mehrerer Laserpulse auf das Werkstück eine mögliche Bewegung der Laserstrahlung auf dem Werkstück berücksichtigt. Bei dieser Betrachtung wird insbesondere eine mögliche Akkumulationswirkung der Energie flächenmäßig überlappender Laserpulse berücksichtigt.

In einer weiteren vorteilhaften Ausgestaltung der Erfindung ist eine erfindungsgemäße Vorrichtung ebenfalls zum Bearbeiten eines Werkstücks mit vorgegebenen Eigenschaften mittels Laserstrahlung eingerichtet, wobei im Rahmen der Materialbearbeitung ein lokales Aufschmelzen des Werkstücks oder einer Laserbearbeitungszone zugeführtes zusätzliches Material beabsichtigt ist. In dieser Ausgestaltung der Erfindung wird die Intensitätsverteilung dergestalt gewählt, dass das Material des Werkstücks - oder extern zugeführtes Material - innerhalb des gesamten Strahlquerschnitts lokal aufschmilzt. Eine solche Verfahrensführung bzw. Einrichtung der erfindungsgemäßen Vorrichtung kann beispielsweise vorteilhaft beim Schweißen oder der generativen Fertigung angewendet werden. Im Zusammenhang mit zugeführtem externem Material kann sie weiterhin vorteilhaft mit dem sogenannten Auftragsschweissen angewendet werden.

In einer weiteren vorteilhaften Ausgestaltung der erfindungsgemäßen Vorrichtung ist vorgesehen, dass sich die von der Strahlformungseinheit auf dem Werkstück erzeugten Intensitätsverteilungen der Laserstrahlung in ihrer Intensitätsverteilung in Strahlrichtung voneinander unterscheiden. Auf diese Weise können Beispielsweise optische Werkzeuge bereitgestellt werden, die in ihrer Tiefenwirkung voneinander unterschiedlich sind.

Denkbar ist beispielsweise, eine Punktbearbeitung des Werkstücks mittels einer Serie aufeinanderfolgender Intensitätsprofile vorzunehmen, bei denen einerseits die Ebene, in der die Foki liegen, schrittweise tiefer im Material des Werkstücks liegt, und andererseits die Ausdehnung des Intensitätsprofils schrittweise verringert wird. Auf diese Weise kann gezielt eine trichterförmige Vertiefung im Werkstück erzeugt werden. Dies ist ein Beispiel dafür, dass eine von der Strahlformungseinheit auf dem Werkstück erzeugte erste Intensitätsverteilung der Laserstrahlung eine andere Fokuslage aufweist als eine andere, danach zur Bearbeitung des Werkstücks angewendete Intensitätsverteilung.

In einer alternativen Ausgestaltung ist vorgesehen, dass eine von der Strahlformungseinheit auf dem Werkstück erzeugte Intensitätsverteilung der Laserstrahlung eine größere Fokuslänge aufweist als eine andere Intensitätsverteilung von der Strahlformungseinheit auf dem Werkstück erzeugte Intensitätsverteilung. Große Fokuslängen können beispielsweise vorteilhaft sein, um tief in das Material des Werkstücks hineinreichende Löcher oder Schnitte zu erzeugen.

Eine große Fokuslänge kann beispielsweise erzeugt werden, indem die auf die Strahlformungseinheit einfallende Laserstrahlung mittels einer Fresnellinse fokussiert wird. Eine solche Linse kann sowohl von mittels eines DOE als auch mittels eines variablen Spatial Light Modulator realisiert werden.

Eine große Fokuslänge kein beispielsweise weiterhin erzeugt werden, indem eine multifokale Intensitätsverteilung erzeugt wird, die mehrere in Strahlrichtung hintereinander angeordnete Foki aufweist.

Eine große Fokuslänge kann beispielsweise weiterhin erzeugt werden, indem eine Besselbeamverteilung erzeugt wird, die in Strahlrichtung zu einem konstanten Fokusdurchmesser über mehrere hundert Mikrometer bis Millimeter ergibt.

Erfindungsgemäß weist die Vorrichtung weiterhin eine Steuereinheit auf, die sowohl die Bewegungseinheit als auch die Strahlformungseinheit ansteuert. Dabei ist Steuereinheit vorteilhaft dazu eingerichtet, die Laserstrahlung, welche die erste Intensitätsverteilung auf dem Werkstück aufweist, entlang eines ersten Pfads über das Werkstück zu führen, und die Laserstrahlung, welche die zweite Intensitätsverteilung auf dem Werkstück aufweist, entlang eines zweiten Pfads über das Werkstück zu führen.

In dieser Weiterbildung kann beispielsweise in einem ersten Bearbeitungsschritt mittels einer ersten Intensitätsverteilung, die eine große Fläche abdeckt, eine großflächige, aber grob strukturierte Bearbeitung der Oberfläche des Werkstücks erfolgen, z.B. ein Materialabtrag oder eine Aufbringung von Material mittels Auftragsschweissen.

In einem zweiten Verfahrensschritt können dann mittels einer zweiten Intensitätsverteilung, die eine deutlich kleinere Fläche abdeckt, kleinräumige Strukturen mit hoher Ortsauflösung in oder auf der Oberfläche des Werkstücks ausgebildet werden.

Erfolgt in beiden Bearbeitungsschritten ein Materialabtrag, so kann dieses Bearbeitungsverfahren als Äquivalent zum aus der konventionellen Materialbearbeitung bekannten "Schruppen und Schlichten" mittels optischen Werkzeugen angesehen werden.

In einer bevorzugten Ausgestaltung ist die Steuereinheit dazu eingerichtet, die Laserstrahlung so über das Werkstück zu führen, dass sich zumindest entlang eines Pfads eine zusammenhängende Bearbeitungsspur ergibt. Bei Verwendung von gepulster Laserstrahlung hat es sich als vorteilhaft erwiesen, wenn sich die Flächen, auf denen die aufeinanderfolgenden Laserpulse auf das Werkstück auftreffen, insbesondere innerhalb derer eine Materialbearbeitung erfolgt, partiell überdecken. Insbesondere hat sich eine Überdeckung auf mindestens 10% der jeweiligen Flächen, bevorzugt zumindest 20% der jeweiligen Flächen und besonders bevorzugt auf etwa 30% oder mehr der jeweiligen Flächen als vorteilhaft für eine gleichmäßige Bearbeitungsspur erwiesen.

Erfindungsgemäß ist die Steuereinheit dazu eingerichtet, die Laserstrahlung so über das Werkstück zu führen, dass entlang des ersten Pfads eine größere Fläche des Werkstücks mittels der Laserstrahlung bearbeitet wird als entlang des zweiten Pfads. Insbesondere hat es sich als vorteilhaft erwiesen, wenn die zweite Fläche maximal 10% der ersten Fläche beträgt, bevorzugt weniger als 5% der ersten Fläche und besonders bevorzugt maximal 1% der ersten Fläche. Diese Ausgestaltung ist insbesondere im Zusammenhang mit dem vorstehend genannten "Schruppen und Schlichten" mit optischen Werkzeugen vorteilhaft.

Dies gilt auch in Bezug auf die weitere vorteilhafte Ausgestaltung, in der die Steuereinheit dazu eingerichtet ist, die Laserstrahlung so über das Werkzeug zu führen, dass entlang des ersten Pfads eine erste Fläche des Werkstücks bearbeitet wird und der zweite Pfad randseitig der ersten Fläche verläuft. Insbesondere kann vorgesehen sein, dass der zweite Pfad die erste Fläche vollständig umschließt. Dies ist aber nicht zwingend erforderlich.

In einer weiteren vorteilhaften Ausgestaltung der erfindungsgemäßen Vorrichtung ist zwischen der Laserstrahlungsquelle und der Strahlformungseinheit eine Vorrichtung zur Strahlaufweitung angeordnet. Eine solche Vorrichtung kann sowohl auf Linsen als auch auf Spiegeln basieren. Auch die Verwendung von Prismenbasierten Vorrichtungen zur Strahlaufweitung ist möglich und vom Umfang der Erfindung umfasst.

Die Vorrichtung zur Strahlaufweitung kann nur in einer Raumrichtung wirksam sein, in der Regel ist sie jedoch so ausgebildet, dass sie in zwei Raumrichtungen wirksam ist. Dabei können die angewendeten Aufweitungsfaktoren in beiden Raumrichtungen gleich sein, sie können aber auch unterschiedlich sein.

Bevorzugt ist die Vorrichtung zur Strahlaufweitung so ausgebildet, dass ein einfallender paralleler Strahl oder Strahl mit geringer Divergenz in einen Strahl mit deutlich größerem Querschnitt umgewandelt wird, der aber weiterhin parallel ist oder nur eine geringe Divergenz aufweist. Die realisierte Vergrößerung des Strahlquerschnitts hängt von den optischen Gegebenheiten uns insbesondere den Abmessungen der in der verwendeten Strahlformungseinheit vorgesehenen optischen Elemente wie einem Spatial Light Modulator ab. In der Praxis hat sich eine Strahlaufweitung bewährt, die mit einer Vergrößerung des Strahlquerschnitts zumindest um den Faktor 4, bevorzugt um den Faktor 9 und insbesondere um den Faktor 25 verbunden ist.

Weiterhin hat es sich als vorteilhaft erwiesen, wenn im Strahlengang der erfindungsgemäßen Vorrichtung zwischen der Laserstrahlungsquelle und der Strahlformungseinheit ein Lambda-Halbe-Verzögerungselement angeordnet ist. Dieses Verzögerungselement erlaubt die Anpassung der Polarisationsrichtung der Laserstrahlung, was insbesondere bei der Verwendung von Spatial Light Modulator auf Basis von Flüssigkristallen in der Strahlformungseinheit vorteilhaft ist.

In einer bevorzugten Ausgestaltung der erfindungsgemäßen Vorrichtung ist im Strahlengang eine Linse, bevorzugt eine F-Theta-Linse, die auch als Planfeldlinse bezeichnet wird, angeordnet, die dazu eingerichtet ist, die einfallende, bevorzugt im Wesentlichen parallele oder nur schwach di- oder konvergente Laserstrahlung auf das Werkstück zu fokussieren. Dabei ist unter einer Linse in diesem Zusammenhang auch ein aus mehreren Linsen zusammengesetztes komplexes Linsensystem zu verstehen.

In einer weiteren bevorzugten Ausgestaltung der erfindungsgemäßen Vorrichtung sind zwischen der Strahlformungseinheit, hier insbesondere einem dort ggf. vorgesehenen Spatial Light Modulator, und dem Aufnahmebereich für das Werkstück zwei Relay-Optiken angeordnet. Diese können als beispielsweise als Einzellinsen ausgebildet sein, z.B. als Achromaten. In der Praxis hat sich jedoch die Verwendung komplexer Linsensysteme als Relay-Optiken als vorteilhaft erwiesen.

Neben weiteren Vorteilen erlaubt es die erfindungsgemäß vorgesehene Einbringung von zwei Relay-Optiken in den Strahlengang, mittels einer zwischen den Relay-Optiken angeordneten optischen Maske unerwünschte Ordnungen aus der modulierten Laserstrahlung, d.h. dem von einem Spatial Light Modulator erzeugten Beugungsbild, auszufiltern. So zeigen praktisch alle kommerziell erhältlichen variablen Spatial Light Modulator neben der erwünschten ersten Beugungsordnung eine unerwünschte nullte Beugungsordnung sowie höhere Beugungsordnungen. Insbesondere kann die Maske also dazu vorgesehen und eingerichtet sein, ungebeugte Anteile der von der Strahlformungseinheit modulierten Laserstrahlung auszufiltern.

Weiterhin hat es sich herausgestellt, dass es möglich ist, durch das Anordnen einer Fresnel-Linse im Strahlengang der Laserstrahlung hinter einer auf einem Spatial Light Modulator basierenden Strahlformungseinheit die vom Spatial Light Modulator erzeugten Beugungsbilder verschiedener Ordnungen räumlich in Strahlrichtung voneinander zu trennen. In einer vorteilhaften Weiterbildung der erfindungsgemäßen Vorrichtung wird von diesem Effekt Gebrauch gemacht. Wobei die erwünschte erste Beugungsordnung gerade auf der Oberfläche des zu bearbeitenden Werkstücks zu liegen kommt.

Es hat sich als vorteilhaft erwiesen, wenn die in der erfindungsgemäßen Vorrichtung vorzusehende Bewegungseinheit zwischen der Strahlformungseinheit und dem Aufnahmebereich angeordnet ist. Hierzu hat es sich insbesondere als vorteilhaft erwiesen, wenn die Bewegungseinheit als Spiegelscanner ausgebildet ist. Geeignete Spiegelscanner sind z.B. galvanometrisch angetriebene Winkelscanner. Diese Winkelscanner können dazu eingerichtet sein, einen oder mehrere Spiegel kontrolliert um eine Drehachse um einen definierten Winkel zu verdrehen. Auf diese Weise kann eine Linearbewegung eines vom Spiegel reflektierten Laserstrahls auf einer Oberfläche erzeugt werden.

Vorteilhaft sind zwei Winkelscanner vorgesehen, die hintereinander angeordnet sein können und eine Drehung eines oder mehrerer Spiegel um entlang verschieden orientierter Raumrichtungen realisieren. Auf diese Weise kann ein Laserstrahl in zwei voneinander unabhängigen Raumrichtungen über eine Oberfläche geführt werden, z.B. eine zu bearbeitende Oberfläche eines Werkstücks.

Alternativ können auch ein oder mehrere als Drehspiegel ausgebildete Spiegelscanner verwendet werden. Diese erlauben eine sehr schnelle Ablenkung eines Laserstrahls, was zur Erzielung hoher Bearbeitungsgeschwindigkeiten mit der erfindungsgemäßen Vorrichtung sein kann.

Alternativ oder ergänzend kann vorgesehen sein, dass die Bewegungseinheit als zumindest eindimensionaler, bevorzugt zweidimensionaler und besonders bevorzugt dreidimensionaler Antrieb des Aufnahmebereichs ausgebildet ist. Der Aufnahmebereich kann z.B. als Tisch ausgebildet sein, der eine Aufnahme für ein Werkstück ausbildet. Dieser Tisch kann von einem z.B. motorisch angetriebenen Lineartrieb verbunden sein, der eine kontrollierte / definierte Bewegung des Tischs in einer Raumrichtung erlaubt. Selbstverständlich ist es möglich, Antriebe für verschiedene, voneinander unabhängige Raumrichtungen vorzusehen. Insbesondere können Antriebe für alle drei voneinander unabhängigen Raumrichtungen X-Y-Z vorgesehen sein.

Nachfolgend wird auf das erfindungsgemäße Verfahren eingegangen, welches sich aus Anspruch 11 ergibt. Zur Vermeidung von Wiederholungen wird auf die vorstehende Beschreibung der erfindungsgemäßen Vorrichtung mit ihren diversen vorteilhaften Ausgestaltungen und Weiterbildungen und deren jeweiligen Vorteilen verwiesen. Diese Ausführungen lassen sich zum größten Teil unmittelbar auf das erfindungsgemäße Verfahren mit seinen diversen vorteilhaften Ausgestaltungen und Weiterbildungen und deren jeweiligen Vorteilen übertragen, ohne dass es hierzu eines erfinderischen Zutuns des Fachmanns bedürfte. Auf die einleitenden Bemerkungen zur Anwendung der Merkmale der sich aus den Unteransprüchen ergebenden Ausgestaltungen und Weiterbildungen auf die Gegenstände der Hauptansprüche sowie der hierauf zurückbezogenen Unteransprüche auch über die Kategoriegrenzen der Ansprüche hinweg wird nochmals explizit hingewiesen.

Weiterhin wird darauf hingewiesen, dass im Zusammenhang mit der nachfolgenden Diskussion des erfindungsgemäßen Verfahrens mit seinen diversen vorteilhaften Ausgestaltungen und Weiterbildungen und deren jeweiligen Vorteilen genannte Verfahrensschritte nicht zwangsläufig in der Reihenfolge ablaufen müssen, in der sie in den Ansprüchen genannt sind. Vielmehr ist an vielen Stellen eine Vertauschung von Verfahrensschritten im Ablauf des Verfahrens möglich.

Ein erfindungsgemäßes Verfahren (siehe Anspruch 11) ist zum Bearbeiten eines Werkstücks durch Bestrahlen mittels Laserstrahlung vorgesehen. Es weist in seiner grundlegenden Ausprägung die folgenden Verfahrensschritte auf:
a. Anordnen eines Werkstücks in einem Aufnahmebereich, welcher dazu vorgesehen ist, ein zu bearbeitendes Werkstück aufzunehmen,
b. Erzeugen von Laserstrahlung mittels einer Laserstrahlungsquelle,
c. Erzeugen einer ersten Intensitätsverteilung der Laserstrahlung auf dem Werkstück durch lokale Modulation der Laserstrahlung mittels einer Strahlformungseinheit und Bearbeiten des Werkstücks mittels der so geformten Laserstrahlung, wobei die Laserstrahlung auf dem Werkstück bewegt wird, und
d. Erzeugen einer zweiten, von der ersten Intensitätsverteilung verschiedenen Intensitätsverteilung der Laserstrahlung auf dem Werkstück und Bearbeiten des Werkstücks mittels der so geformten Laserstrahlung, wobei die Laserstrahlung auf dem Werkstück bewegt wird.

Beim Bearbeiten des Werkstücks mittels der Laserstrahlung, die die erste Intensitätsverteilung auf dem Werkstück aufweist, wird die Laserstrahlung entlang eines ersten Pfades über das Werkstück geführt, und beim Bearbeiten des Werkstücks mittels der Laserstrahlung, die die zweite Intensitätsverteilung auf dem Werkstück aufweist, wird die Laserstrahlung entlang eines zweiten, vom ersten Pfad verschiedenen Pfads über das Werkstück geführt, Das erfindungsgemäße Verfahren definiert weiter, dass entlang des ersten Pfads eine größere Fläche des Werkstücks mittels der Laserstrahlung bearbeitet wird als entlang des zweiten Pfads, wobei insbesondere die zweite Fläche maximal 10% der ersten Fläche beträgt, bevorzugt weniger als 5% der ersten Fläche und besonders bevorzugt maximal 1% der ersten Fläche.

In einer vorteilhaften Weiterbildung des erfindungsgemäßen Verfahrens wird ein variabler Spatial Light Modulator als Strahlformungseinheit bereitgestellt. Die die erste und ggf. auch die die zweite Intensitätsverteilung werden dann mittels des variablen Spatial Light Modulators erzeugt, d.h. dass im Rahmen der Weiterbildung zumindest die vom Spatial Light Modulator auf dem Werkstück erzeugte erste, bevorzugt auch die zweite Intensitätsverteilung elektronisch eingestellt wird.

In einer vorteilhaften Weiterbildung des erfindungsgemäßen Verfahrens werden zumindest ein, bevorzugt zumindest zwei, Spatial Light Modulatoren bereitgestellt, der/die jeweils zur Erzeugung einer vorbestimmten Intensitätsverteilung der Laserstrahlung auf dem im Aufnahmebereich angeordneten Werkstück eingerichtet sind, wobei die vorbestimmte/n Intensitätsverteilung/en nicht veränderlich ist/sind und - im Fall zweier Spatial Light Modulatoren - voneinander verschieden sind.

In einer vorteilhaften Weiterbildung des erfindungsgemäßen Verfahrens weist das Verfahren die folgenden zusätzlichen Verfahrensschritte auf:
- Anordnen des Spatial Light Modulators im Strahlengang der Laserstrahlung zwischen Laserstrahlungsquelle und dem Aufnahmebereich, und
- Anordnen des Spatial Light Modulators außerhalb des Strahlengangs der Laserstrahlung zwischen Laserstrahlungsquelle und dem Aufnahmebereich.

In einer alternativen vorteilhaften Weiterbildung des erfindungsgemäßen Verfahrens weist das Verfahren die folgenden zusätzlichen Verfahrensschritte auf:
- Anordnen nur des ersten Spatial Light Modulators im Strahlengang der Laserstrahlung zwischen Laserstrahlungsquelle und dem Aufnahmebereich, und
- Anordnen nur des zweiten Spatial Light Modulator im Strahlengang der Laserstrahlung zwischen Laserstrahlungsquelle und dem Aufnahmebereich.

Der im Rahmen des erfindungsgemäßen Verfahrens verwendete Spatial Light Modulator bzw. die verwendeten mehreren Spatial Light Modulator sind dabei vorteilhaft dazu eingerichtet, ortsabhängig die Phase oder/und die Intensität der Laserstrahlung zu verändern.

In einer ersten vorteilhaften Ausprägung des erfindungsgemäßen Verfahrens wird im Rahmen des Verfahrens gepulste Laserstrahlung zur Bearbeitung des Werkstücks eingesetzt. Auf die im Kontext mit der erfindungsgemäßen Vorrichtung gemachten Angaben zu vorteilhaften Pulsdauern wird in diesem Zusammenhang Bezug genommen.

In einer zweiten vorteilhaften Ausprägung des erfindungsgemäßen Verfahrens wird im Rahmen des Verfahrens kontinuierliche Laserstrahlung zur Bearbeitung des Werkstücks eingesetzt. Auf die im Kontext mit der erfindungsgemäßen Vorrichtung gemachten Angaben zu vorteilhaften Eigenschaften der eingesetzten kontinuierlichen Laserstrahlung wird in diesem Zusammenhang Bezug genommen.

Bezüglich der im Rahmen des erfindungsgemäßen Verfahren vorteilhaft eingesetzten Intensitätsverteilungen der Laserstrahlung auf dem Werkstück wird auf folgende vorteilhafte Konfigurationen bzw. Verfahrensführungen hingewiesen.

In einer vorteilhaften Ausgestaltung des erfindungsgemäßen Verfahrens unterscheiden sich die zur Bearbeitung des Werkstückes angewendeten Intensitätsverteilungen auf dem Werkstück in einer Ebene quer zur Strahlachse voneinander, insbesondere in einer durch die obenliegende Oberfläche des Werkstücks definierten Ebene.

In einer weiteren vorteilhaften Ausgestaltung des erfindungsgemäßen Verfahrens weist eine beispielsweise von einer Strahlformungseinheit auf dem Werkstück erzeugte Intensitätsverteilung der Laserstrahlung in einer Ebene quer zur Strahlachse mehrere Intensitätsmaxima auf.

In einer weiteren vorteilhaften Ausgestaltung des erfindungsgemäßen Verfahrens weist eine von der Strahlformungseinheit auf dem Werkstück erzeugte Intensitätsverteilung in einer Ebene quer zur Strahlachse mehrere Intensitätsmaxima auf, die denselben Abstand von der Strahlachse aufweisen, wobei diese Intensitätsmaxima symmetrisch um die Strahlachse verteilt sind.

In einer weiteren vorteilhaften Ausgestaltung des erfindungsgemäßen Verfahrens weist eine von der Strahlformungseinheit auf dem Werkstück erzeugte Intensitätsverteilung zumindest ein linienhaft ausgedehntes Intensitätsmaximum auf. Dabei bildet das linienhaft ausgedehnte Intensitätsmaximum vorteilhaft eine geschlossene Schleife um die Strahlachse aus, wobei die Schleife insbesondere in einer Ebene quer zur Strahlachse liegen kann.

In einer weiteren vorteilhaften Ausgestaltung des erfindungsgemäßen Verfahrens weist die Intensitätsverteilung ein Intensitätsminimum auf der Strahlachse auf.

In einer weiteren vorteilhaften Ausgestaltung des erfindungsgemäßen Verfahrens weist zumindest eine beispielsweise von einer Strahlformungseinheit auf dem Werkstück erzeugte Intensitätsverteilung der Laserstrahlung nur ein Intensitätsmaximum auf.

In einer weiteren vorteilhaften Ausgestaltung des erfindungsgemäßen Verfahrens unterscheiden sich die von der Strahlformungseinheit auf dem Werkstück erzeugten Intensitätsverteilungen der Laserstrahlung in ihrer Intensitätsverteilung in Strahlrichtung voneinander.

Letzteres kann insbesondere bedeuten, dass die eine beispielsweise von einer Strahlformungseinheit auf dem Werkstück erzeugte Intensitätsverteilung der Laserstrahlung eine größere Fokuslänge oder/und andere Fokuslage aufweist als die andere Intensitätsverteilung.

In einer besonders vorteilhaften Ausprägung des erfindungsgemäßen Verfahrens ist vorgesehen, dass die Intensitätsverteilung der zur Bearbeitung des Werkstücks eingestrahlten Laserstrahlung so gewählt ist, dass sich in einer seitlichen Projektion der Intensität auf eine entlang der Strahlachse verlaufende Ebene ein Intensitätsverlauf mit zumindest zwei randseitigen Maxima und zumindest einem, bevorzugt mehreren, dazwischenliegenden Minimum/Minima ergibt.

Dabei beträgt die Intensität im Minimum/in den Minima vorteilhaft mindestens 50% der Intensität der Maxima, bevorzugt mindestens 65% und besonders bevorzugt mindestens 80%.

In einer besonders vorteilhaften Verfahrensführung, die zur Bearbeitung eines Werkstücks mit vorgebebenen Eigenschaften insbesondere bezüglich Material und Geometrie vorgesehen ist, ist vorgesehen, dass die Intensitätsverteilung der zur Bearbeitung des Werkstücks vorgesehenen gepulsten Laserstrahlung auf dem Werkstück dergestalt gewählt wird, dass während der gesamten Pulsdauer und innerhalb des gesamten Strahlquerschnitts im Wesentlichen kein lokales Aufschmelzen des Werkstücks auftritt. Um dies sicherzustellen werden vorteilhaft neben den Parametern der verwendeten Laserstrahlung auch die Eigenschaften, insbesondere die optischen und die thermischen Eigenschaften, des zu bearbeitenden Werkstücks berücksichtigt.

In einer alternativen, besonders vorteilhaften Verfahrensführung die zur Bearbeitung eines Werkstücks mit vorgebebenen Eigenschaften insbesondere bezüglich Material und Geometrie vorgesehen ist, ist vorgesehen, dass die Intensitätsverteilung der zur Bearbeitung des Werkstücks vorgesehenen kontinuierlichen Laserstrahlung auf dem Werkstück dergestalt gewählt wird, dass das Material des Werkstücks innerhalb des gesamten Strahlquerschnitts lokal aufschmilzt.

Vorteilhaft wird in dieser Weiterbildung die Laserstrahlung so über das Werkstück geführt, dass sich zumindest entlang des ersten oder des zweiten Pfads, bevorzugt entlang beider Pfade, eine zusammenhängende Bearbeitungsspur ergibt.

In einer weiteren vorteilhaften Ausgestaltung der vorstehenden Weiterbildung ist vorgesehen, dass die Laserstrahlung so über das Werkstück geführt wird, dass entlang des ersten Pfads eine erste Fläche des Werkstücks bearbeitet wird und der zweite Pfad randseitig der ersten Fläche verläuft.

Um die Laserstrahlung im Rahmen des erfindungsgemäßen Verfahrens über die Oberfläche des Werkstücks zu bewegen, hat es sich bewährt, wenn die Laserstrahlung mittels eines Spiegelscanners auf dem Werkstück bewegt wird.

Alternativ bzw. ergänzend hat es sich bewährt, die Laserstrahlung im Rahmen des erfindungsgemäßen Verfahrens über die Oberfläche des Werkstücks zu bewegen, indem das Werkstück währen der Beaufschlagung mit der bearbeitenden Laserstrahlung bewegt wird. Hierzu kann ein Antrieb des Aufnahmebereichs vorgesehen sein, der als zumindest eindimensionaler, bevorzugt zweidimensionaler und besonders bevorzugt dreidimensionaler Antrieb des Aufnahmebereichs ausgebildet ist.

Besondere Vorteile im Zusammenhang mit der Ausführung des erfindungsgemäßen Verfahren sin seinen diversen Ausgestaltungen und Weiterbildungen ergeben sich, wenn einer oder mehrere der folgenden zusätzlichen Verfahrensschritte ausgeführt werden:
- Fokussieren der Laserstrahlung mittels einer Linse, bevorzugt einer F-Theta-Linse, auf das Werkstück, und/oder
- Aufweiten von der Laserstrahlungsquelle erzeugten Laserstrahlung im Strahlengang zwischen der Laserstrahlungsquelle und der Strahlformungseinheit, und/oder
- Einstellen der Polarisation von der Laserstrahlungsquelle erzeugten Laserstrahlung durch Anordnen eines Lambda-Halbe-Verzögerungselements zwischen der Laserstrahlungsquelle und der Strahlformungseinheit, und/oder
- Anordnen von zwei Relay-Optiken im Strahlengang zwischen der Strahlformungseinheit und dem Aufnahmebereich, und/oder
- Anordnen einer für die Laserstrahlung undurchdringlichen Maske zwischen den Relay-Optiken, die dazu eingerichtet ist, einen Teil der modulierten Laserstrahlung auszufiltern, wobei die Maske insbesondere dazu eingerichtet sein kann, ungebeugte Anteile der von der Strahlformungseinheit modulierten Laserstrahlung auszufiltern

Weitere Vorteile und Merkmale ergeben sich aus den nachfolgenden Ausführungsbeispielen. Diese sollen dem Fachmann die Erfindung verdeutlichen und ihn in die Lage versetzen, die Erfindung auszuführen, ohne jedoch die Erfindung zu beschränken. Die in den Ausführungsbeispielen aufscheinenden Merkmale können ebenfalls zur Weiterbildung der erfindungsgemäßen Vorrichtung sowie des erfindungsgemäßen Verfahrens herangezogen werden. Die Ausführungsbeispiele werden anhand der Zeichnung näher erläutert. In dieser zeigen:
- Fig. 1:: ein erstes Ausführungsbeispiel einer erfindungsgemäßen Vorrichtung in schematischer Darstellung,
- Fig. 2:: ein erstes Beispiel zweier Bearbeitungspfade der erfindungsgemäßen Laserbearbeitung beim "Schruppen und Schlichten"
- Fig. 3:: ein zweites Beispiel zweier Bearbeitungspfade der erfindungsgemäßen Laserbearbeitung beim "Schruppen und Schlichten" in einer detaillierteren Ansicht,
- Fig. 4 (obere Hälfte):: eine gemäß der Erfindung auf einem Werkstück erzeugte Intensitätsverteilung, und

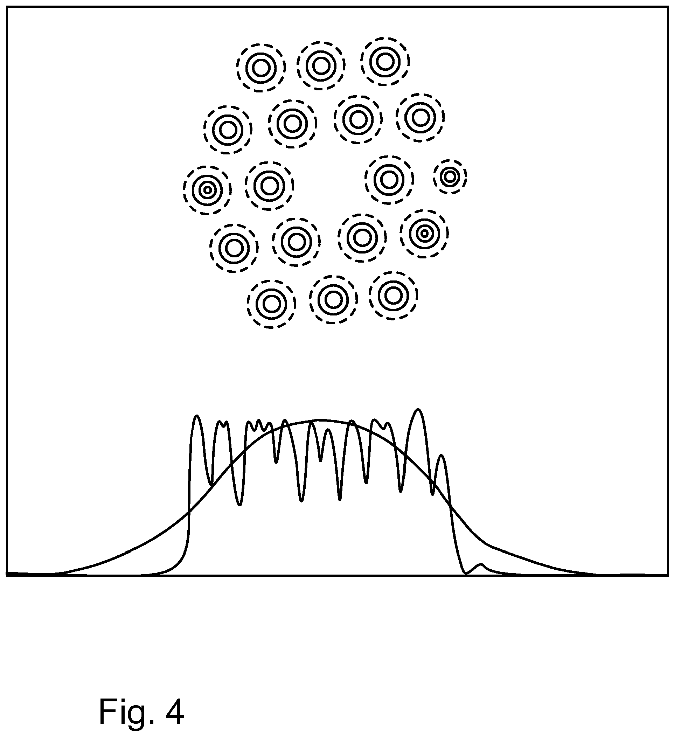

- Fig. 4 (untere Hälfte):: eine Projektion der Intensitätsverteilung aus der oberen Hälfte von Bild 4 auf eine Ebene, in der die Strahlrichtung verläuft.

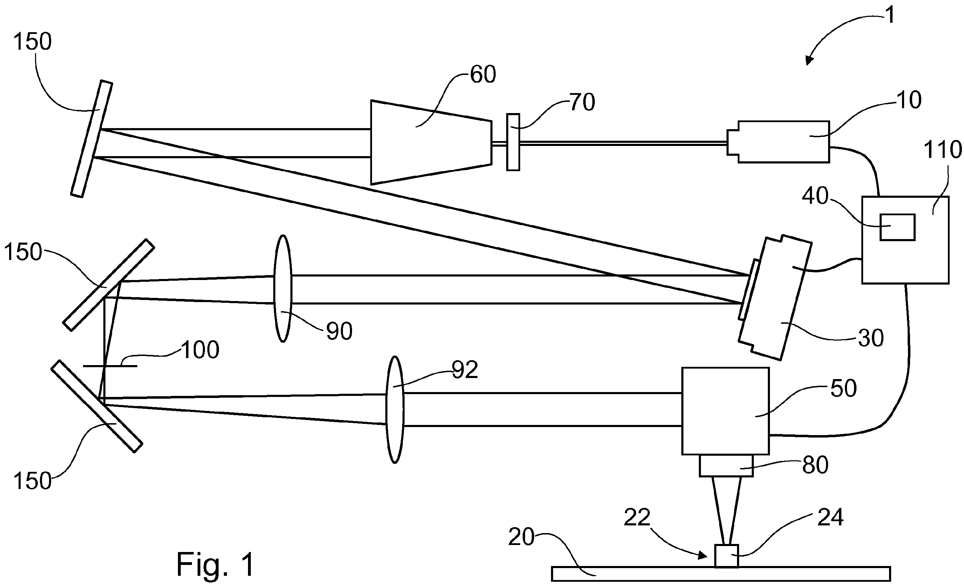

Fig. 1 zeigt ein erstes Ausführungsbeispiel einer erfindungsgemäße Vorrichtung 1. Diese umfasst eine Laserstrahlungsquelle 10, einen Tisch 20, der einen Aufnahmebereich 22 zur Aufnahme eines zu bearbeitenden Werkstücks 24 ausbildet und eine als Spatial Light Modulator ausgebildete Strahlformungseinheit 30, die zwischen Laserstrahlungsquelle 10 und dem Bearbeitungsbereich 22 in den Strahlengang der von der Laserstrahlungsquelle 10 erzeugten Laserstrahlung eingefügt ist. Die Strahlformungseinheit 30 ist dazu eingerichtet, durch lokale Modulation der Laserstrahlung zumindest zwei verschiedene vorbestimmte Intensitätsverteilungen der Laserstrahlung auf dem Werkstück 24 zu erzeugen.

Hierzu ist der in der Strahlformungseinheit 30 vorgesehene Spatial Light Modulator als variabler Spatial Light Modulator ausgebildet. Bei dem verwendeten Spatial Light Modulator handelt es sich um ein aktives optisches Bauelement, welches die Phase des von der Laserstrahlungsquelle 10 erzeugten und auf den Spatial Light Modulator einfallenden Laserstrahls lokal in Abhängigkeit vom Ort variiert. Dabei kann die lokale Phasenverzögerung pixelweise aktiv gesteuert werden. Hierzu ist der Spatial Light Modulator mit einer Steuereinheit 40 verbunden, die dazu eingerichtet ist, die vom Spatial Light Modulator angewendete lokal variierende Phasenverzögerung pixelweise elektronisch einzustellen.

Der Spatial Light Modulator wird in einer Reflexionskonfiguration verwendet. Der Spatial Light Modulator basiert auf einer Reflexion der einfallenden Laserstrahlung an einer Siliziumoberfläche, vor der eine Flüssigkristallschicht angeordnet ist. Dabei können die doppelbrechenden Eigenschaften der Flüssigkristallschicht durch Anlegen eines elektrischen Felds über mikrostrukturierte Elektroden gezielt lokal eingestellt werden. Entsprechende Spatial Light Modulator werden von der Fa. Hamamatsu unter der Bezeichnung LCOS("Liquid Crystal on Silicon")-Spatial Light Modulator vertrieben.

Der verwendete Spatial Light Modulator erlaubt die Erzeugung von in weiten Grenzen frei vorgebbaren Intensitätsverteilungen auf dem Werkstück 24 durch Beugung von Laserstrahlung an einem phasenmodulierenden Gitter. Dabei verkraften derartig aufgebaute Spatial Light Modulator sehr hohe Laserleistungen sowohl bei der Verwendung von kontinuierlicher als auch von gepulster Laserstrahlung.

Weiterhin ist am Spatial Light Modulator eine aktive Kühlung vorgesehen, die eine effiziente Abfuhr von Verlustwärme bei sehr hohen Laserleistungen ermöglicht. Diese basiert auf einer Wärmeabfuhr über ein zirkulierendes Kühlmedium, insbesondere Wasser.

Im Strahlengang der Laserstrahlung ist eine Mehrzahl dielektrischer Spiegel 150 zur Strahlumlenkung angeordnet.

Die verwendete Laserstrahlungsquelle 10 erzeugt gepulste Laserstrahlung mit einer Pulsdauer zwischen 100 ns und einigen fs. Typische Pulswiederholraten liegen dabei im Bereich von einigen Hundert Hertz bis einigen Kilohertz. Die optische Leistung der Laserstrahlungsquelle liegt bei etwa 100 W. Die Laserstrahlungsquelle erzeugt monomodale Laserstrahlung in der TEM₀₀-Mode. Diese weist einen kreisrunden Querschnitt auf. Die Wellenlänge beträgt 532 nm, erzeugt mittels Frequenzverdoppelung eines laseraktiven Nd:YAG-Kristalls.

Weiterhin ist zwischen der Laserstrahlungsquelle 10 und der Strahlformungseinheit 30 eine auf Linsen basierende Vorrichtung zur Strahlaufweitung 60 angeordnet. Die erzeugte Strahlaufweitung ist in beiden Raumrichtungen senkrecht zur Stahlrichtung gleich. Bezogen auf den Strahldurchmesser wird der einfallende Laserstrahl um einen Aufweitungsfaktor von 5 aufgeweitet, d.h. der Strahlquerschnitt erhöht sich um den Faktor 25.

Die Vorrichtung zur Strahlaufweitung 60 ist so ausgebildet, dass der von der Laserstrahlungsquelle erzeugte, quasi parallele Strahl in einen Strahl mit deutlich größerem Querschnitt umgewandelt wird, der aber weiterhin nur eine geringe Divergenz aufweist, so dass er quasi als parallel anzusehen ist.

Weiterhin ist im Strahlengang der gezeigten Vorrichtung 1 zwischen der Laserstrahlungsquelle 10 und der Strahlformungseinheit 30 ein als Lambda-Halbe-Plättchen ausgebildetes Lambda-Halbe-Verzögerungselement 70 angeordnet. Dieses Verzögerungselement 70 erlaubt die Anpassung der Polarisationsrichtung der auf dem Spatial Light Modulator der Strahlformungseinheit 30 einfallenden Laserstrahlung.

Im Strahlengang hinter der Strahlformungseinheit 30 sind zwei Relay-Optiken 90, 92 angeordnet, zwischen denen der Laserstrahl eine ausgeprägte Strahltaille ausbildet.

Mittels einer am Ort dieser Strahltaille angeordneten optischen Maske 100 aus einem strukturierten Metallblech werden unerwünschte Ordnungen aus der modulierten Laserstrahlung, d.h. dem vom Spatial Light Modulator der Strahlformungseinheit 30 erzeugten Beugungsbild, ausgefiltert. Unerwünscht sind insbesondere die vom Spatial Light Modulator ungebeugten Strahlanteile, die praktisch die nullte Beugungsordnung des Spatial Light Modulator darstellen.

Weiterhin ist im Strahlengang hinter der Strahlformungseinheit 30 vor dem Werkstück 24 eine aus mehreren Linsen zusammengesetzte F-Theta-Linse 80 (auch "Planfeldlinse"), angeordnet, die dazu eingerichtet ist, die von der zweiten Relay-Optik 92 einfallende, im Wesentlichen parallele Laserstrahlung auf das im Aufnahmebereich 22 auf dem Tisch 20 befindliche Werkstück 24 zu fokussieren.

Weiterhin ist eine Bewegungseinheit 50 vorgesehen, die dazu eingerichtet ist, eine Bewegung der von der Laserstrahlungsquelle 10 erzeugten Laserstrahlung auf einem im Aufnahmebereich 22 angeordneten Werkstücks 24 zu bewirken. Im gezeigten Ausführungsbeispiel wird diese Bewegung durch eine aktive Steuerung des Strahlengangs der Laserstrahlung bewirkt.

Im gezeigten Ausführungsbeispiel ist die Bewegungseinheit 50 als 2-achsiger galvanometrischer Spiegelscanner ausgebildet. Mittels dieses Spiegelscanners kann der Laserstrahl entlang zweier voneinander unabhängiger Achsen X und Y, die in der Ebene der Oberfläche des Tischs 20 liegen, auf der Oberfläche des Werkstücks 24 bewegt werden.

Weiterhin weist die gezeigte Vorrichtung weist diese weiterhin eine zentrale Steuereinheit 110 auf, in die die Steuereinheit 40 des Spatial Light Modulator integriert ist und die sowohl die Bewegungseinheit 50 als auch die Strahlformungseinheit 30 ansteuert. Dabei ist zentrale Steuereinheit 110 dazu eingerichtet, die Laserstrahlung zur Bearbeitung eines Werkstücks 24, welches sich im Aufnahmebereich 22 befindet, über die Oberfläche des Werkstücks 24 zu bewegen.

Die zentrale Steuereinheit 110 ist weiterhin dazu eingerichtet, die Strahlformungseinheit 30 so anzusteuern, dass sich zwei verschiedene Intensitätsverteilungen der Laserstrahlung auf der Oberfläche des Werkstücks 24 ergeben.

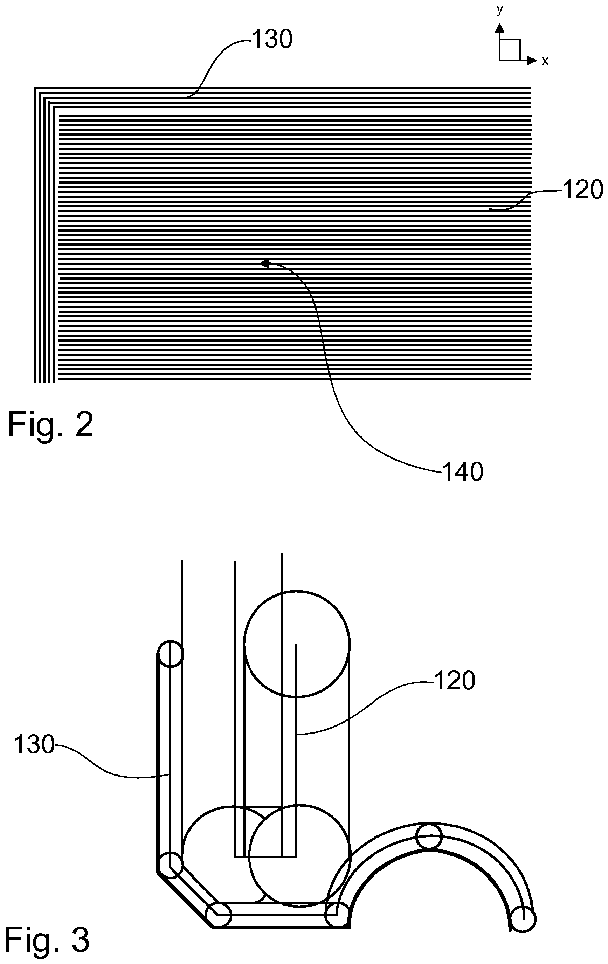

Mittels der gezeigten Vorrichtung 1 ist es möglich, ein Werkstück 24 sehr effizient zu bearbeiten, da sie eine Materialbearbeitung mittels zwei verschiedenen optischen Werkzeugen ohne relevante Umrüstzeiten ermöglicht. So kann beispielsweise eine erste Intensitätsverteilung auf dem Werkstück 24 dahingehend optimiert sein, dass ein möglichst großflächiger Energieeintrag in die Oberfläche des Werkstücks 24 erfolgt. Auf diese Weise kann beispielsweise sehr rasch ein großflächiger Materialabtrag erfolgen, wobei jedoch die erzielbaren Strukturgrö-ßen bedingt durch die große Fläche der ersten Intensitätsverteilung recht groß sind und beispielsweise im Bereich von einigen zig bis einigen hundert Mikrometern liegen können. Indem jedoch beispielsweise nachfolgend mit einer zweiten Intensitätsverteilung, die eine deutlich kleinere Fläche einnimmt, die Oberfläche des Werkstücks 24 bearbeitet wird, können Kanten geschärft, Ecken ausgeräumt oder filigranere Strukturen erzeugt werden. Bearbeitungspfade einer solchen zweistufigen Laserbearbeitung sind exemplarisch in Fig. 2 dargestellt. In dieser ist der Pfad des Laserstrahls auf der Oberfläche des Werkstücks 24 mit großem Durchmesser mit 120 bezeichnet, der Pfad des Laserstrahls mit kleinem Durchmesser hingegen mit 130.

Die hier erzielbaren Strukturgrößen sind grundsätzlich nur durch das theoretische Beugungslimit begrenzt und können im Bereich von einigen Mikrometern bis unter einem Mikrometer liegen. Gegenüber der aus dem Stand der Technik vorbekannten Materialbearbeitung durch Bestrahlung mittels Laserstrahlung kann mit der beispielhaft gezeigten erfindungsgemäßen Vorrichtung 1 die Bearbeitungsgeschwindigkeit vervielfacht werden.

Die zentrale Steuereinheit 110 ist zur Ansteuerung der Vorrichtung 1 eingerichtet. Hierbei sind insbesondere die folgenden Verfahrensabläufe in der zentralen Steuereinheit implementiert:
Ein beispielhaft genanntes, in der zentralen Steuereinheit 110 implementiertes Verfahren ist zum Bearbeiten eines Werkstücks 24 durch Bestrahlen mittels Laserstrahlung vorgesehen. Es weist in seiner grundlegenden Ausprägung die folgenden Verfahrensschritte auf:
a. Anordnen eines Werkstücks 24 im Aufnahmebereich 22,
b. Erzeugen von gepulster Laserstrahlung mittels der Laserstrahlungsquelle 10,
c. Erzeugen einer ersten Intensitätsverteilung der Laserstrahlung auf dem Werkstück 24 durch lokale Modulation der Laserstrahlung mittels der Strahlformungseinheit 30 und Bearbeiten des Werkstücks 24 mittels der so geformten Laserstrahlung, wobei die Laserstrahlung ggf. mittels der Bewegungseinheit 50 auf dem Werkstück 24 bewegt wird, und
d. Erzeugen einer zweiten, von der ersten Intensitätsverteilung verschiedenen Intensitätsverteilung der Laserstrahlung auf dem Werkstück 24 und Bearbeiten des Werkstücks mittels der so geformten Laserstrahlung, wobei die Laserstrahlung ggf. mittels der Bewegungseinheit 50 auf dem Werkstück 24 bewegt wird.

Dabei werden die vom Spatial Light Modulator der Strahlformungseinheit 30 auf dem Werkstück 24 erzeugte erste und zweite Intensitätsverteilung elektronisch von der Steuereinheit 40 der Strahlformungseinheit 30 eingestellt.

Dabei ist die zentrale Steuereinheit 110 dazu eingerichtet, zwei zur Bearbeitung des Werkstückes 24 angewendete Intensitätsverteilungen auf dem Werkstück 24 zu erzeugen, die sich in einer Ebene quer zur Strahlachse voneinander unterscheiden, insbesondere in einer durch die obenliegende Oberfläche des Werkstücks 24 definierten Ebene.

Weiterhin ist die zentrale Steuereinheit 110 dazu eingerichtet, die Strahlformungseinheit 30 so anzusteuern, dass zumindest eine Intensitätsverteilung der Laserstrahlung auf dem Werkstück 24 erzeugt wird, die in einer Ebene quer zur Strahlachse mehrere Intensitätsmaxima aufweist. Die erzeugte Intensitätsverteilung weist weiterhin ein Intensitätsminimum auf der Strahlachse auf.

Weiterhin ist die zentrale Steuereinheit 110 dazu eingerichtet, die Strahlformungseinheit 30 so anzusteuern, dass zumindest eine Intensitätsverteilung der Laserstrahlung auf dem Werkstück 24 erzeugt wird, die in einer Ebene quer zur Strahlachse mehrere Intensitätsmaxima aufweist, die denselben Abstand von der Strahlachse aufweisen, wobei diese Intensitätsmaxima symmetrisch um die Strahlachse verteilt sind. Die erzeugte Intensitätsverteilung weist weiterhin ein Intensitätsminimum auf der Strahlachse auf. Eine solche Intensitätsverteilung ist exemplarisch in Fig. 4 (obere Hälfte) dargestellt.

Weiterhin ist die zentrale Steuereinheit 110 dazu eingerichtet, die Strahlformungseinheit 30 so anzusteuern, dass zumindest eine Intensitätsverteilung der Laserstrahlung auf dem Werkstück 24 erzeugt wird, die ein linienhaft ausgedehntes Intensitätsmaximum aufweist. Dabei bildet das linienhaft ausgedehnte Intensitätsmaximum eine geschlossene Schleife um die Strahlachse aus, wobei die Schleife in einer Ebene quer zur Strahlachse liegt.

Weiterhin ist die zentrale Steuereinheit 110 dazu eingerichtet, die Strahlformungseinheit 30 so anzusteuern, dass zumindest eine Intensitätsverteilung der Laserstrahlung auf dem Werkstück 24 erzeugt wird, die nur ein Intensitätsmaximum aufweist.

Weiterhin ist die zentrale Steuereinheit 110 dazu eingerichtet, die Strahlformungseinheit 30 so anzusteuern, dass zumindest eine Intensitätsverteilung der Laserstrahlung auf dem Werkstück 24 erzeugt wird, so dass sich in einer seitlichen Projektion der Intensität auf eine entlang der Strahlachse verlaufende Ebene ein Intensitätsverlauf mit zumindest zwei randseitigen Maxima und mehreren dazwischenliegenden Minima ergibt. Dabei beträgt die Intensität in den Minima mindestens 80% der Intensität der Maxima. Ein solcher Intensitätsverlauf, der mehr als nur zwei randseitige Maxima aufweist, ist in Fig. 4 (untere Hälfte) exemplarisch dargestellt. Der gezeigte Intensitätsverlauf ergibt sich durch Projektion der Strahlverteilung gemäß Fig. 4 (obere Hälfte) auf eine Ebene, in der die Strahlrichtung verläuft.

Weiterhin ist die zentrale Steuereinheit 110 dazu eingerichtet, die Strahlformungseinheit 30 so anzusteuern, dass zumindest zwei Intensitätsverteilungen der Laserstrahlung auf dem Werkstück 24 erzeugt werden, die sich in ihrer Intensitätsverteilung in Strahlrichtung voneinander unterscheiden.

Letzteres bedeutet insbesondere, dass die eine auf dem Werkstück 24 erzeugte Intensitätsverteilung der Laserstrahlung eine größere Fokuslänge oder/und eine andere Fokuslage aufweist als die andere Intensitätsverteilung.

Weiterhin ist die zentrale Steuereinheit 110 dazu eingerichtet, ein Werkstück 24 wie folgt zu bearbeiten:
- Bearbeiten des Werkstücks 24 mittels Laserstrahlung, die eine erste Intensitätsverteilung auf dem Werkstück 24 aufweist, wobei die Laserstrahlung entlang eines ersten Pfads 120 über das Werkstück 24 geführt wird, und
- Bearbeiten des Werkstücks 24 mittels Laserstrahlung, die eine zweite Intensitätsverteilung auf dem Werkstück 24 aufweist, wobei die Laserstrahlung entlang eines zweiten, vom ersten Pfad 120 verschiedenen Pfads 130 über das Werkstück 24 geführt wird.

Dabei führt die zentrale Steuereinheit 110 in dieser Verfahrensführung die Laserstrahlung so über das Werkstück 24, dass sich entlang beider Pfade 120, 130 eine zusammenhängende Bearbeitungsspur ergibt.

Weiterhin ist die zentrale Steuereinheit 110 dazu eingerichtet, die Vorrichtung 10 so anzusteuern, dass entlang des ersten Pfads 120 eine größere Fläche des Werkstücks 24 mittels der Laserstrahlung bearbeitet wird als entlang des zweiten Pfads 130. Dies ist bei dem in Fig. 3 dargestellten Anwendungsbeispiel der Fall. Insbesondere wird in diesem Anwendungsbeispiel die Laserstrahlung so über das Werkstück 24 geführt, dass entlang des ersten Pfads 120 eine erste Fläche 140 des Werkstücks 24 bearbeitet wird und der zweite Pfad 130 randseitig der ersten Fläche verläuft.

Weiterhin ist die zentrale Steuereinheit 110 dazu eingerichtet, die Vorrichtung 10 zur Bearbeitung eines Werkstücks 24 mit vorgebebenen Eigenschaften insbesondere bezüglich Material und Geometrie so anzusteuern, dass die Intensitätsverteilung der zur Bearbeitung des Werkstücks 24 vorgesehenen gepulsten Laserstrahlung auf dem Werkstück 24 dergestalt gewählt wird, dass während der gesamten Pulsdauer und innerhalb des gesamten Strahlquerschnitts im Wesentlichen kein lokales Aufschmelzen des Werkstücks 24 auftritt. Um dies sicherzustellen werden von der zentralen Steuereinheit 110 neben den Parametern der verwendeten Laserstrahlung auch die Eigenschaften, insbesondere die optischen und die thermischen Eigenschaften, des zu bearbeitenden Werkstücks 24 berücksichtigt.

In einer Weiterentwicklung wird von der zentralen Steuereinheit 110 neben der Wirkung der von einem Laserpuls in das Werkstück 24 eingebrachten optischen Energie zusätzlich die Akkumulation der Energie der Pulse über mehrere aufeinanderfolgende Laserpulse berücksichtigt.

In einer noch weitergehenden Weiterentwicklung wird darüber hinaus wird von der zentralen Steuereinheit 110 bei der Bestimmung der Wirkung mehrerer Laserpulse auf das Werkstück eine mögliche Bewegung der Laserstrahlung auf dem Werkstück 24 berücksichtigt. Bei dieser Betrachtung wird insbesondere eine mögliche Akkumulationswirkung der Energie flächenmäßig überlappender Laserpulse berücksichtigt.

In einem zweiten, hier nicht dargestellten Ausführungsbeispiel ist die Laserstrahlungsquelle 10 zur Erzeugung kontinuierlicher Laserstrahlung zur Bearbeitung des Werkstücks eingerichtet. Ansonsten entspricht die Vorrichtung gemäß dem zweiten Ausführungsbeispiel der Vorrichtung gemäß dem ersten Ausführungsbeispiel.

In diesem zweiten Ausführungsbeispiel ist die zentrale Steuereinheit 110 dazu eingerichtet, bei der Bearbeitung eines Werkstücks 24 mit vorgebebenen Eigenschaften insbesondere bezüglich Material und Geometrie die Intensitätsverteilung der zur Bearbeitung des Werkstücks 24 vorgesehenen kontinuierlichen Laserstrahlung auf dem Werkstück 24 dergestalt gewählt wird, dass das Material des Werkstücks 24 innerhalb des gesamten Strahlquerschnitts lokal aufschmilzt.

### Bezugszeichen

- 1: Vorrichtung
- 10: Laserstrahlquelle
- 20: Tisch
- 22: Aufnahmebereich
- 24: Werkstück
- 30: Strahlformungseinheit
- 40: Steuereinheit Spatial Light Modulator
- 50: Bewegungseinheit
- 60: Vorrichtung zur Strahlaufweitung
- 70: Lambda-Halbe-Verzögerungselement
- 80: f-Theta-Linse
- 90: erste Relay-Optik
- 92: zweite Relay-Optik
- 100: Maske
- 110: zentrale Steuereinheit
- 120: erster Pfad
- 130: zweiter Pfad
- 140: erste Fläche
- 150: dielektrischer Spiegel

## Patentansprüche

1. Vorrichtung zum Bearbeiten eines Werkstücks (24) durch Bestrahlen mittels Laserstrahlung, die folgenden Merkmale aufweisend:
• eine Laserstrahlungsquelle (10),
• ein Aufnahmebereich (22) zur Aufnahme eines zu bearbeitenden Werkstücks (24),
• eine Strahlformungseinheit (30), die zwischen Laserstrahlungsquelle (10) und Aufnahmebereich (22) in den Strahlengang der von der Laserstrahlungsquelle (10) erzeugten Laserstrahlung eingefügt und dazu eingerichtet ist, durch lokale Modulation der Laserstrahlung zumindest zwei verschiedene vorbestimmte Intensitätsverteilungen, nämlich zumindest eine erste Intensitätsverteilung und eine zweite Intensitätsverteilung, der Laserstrahlung auf dem Werkstück (24) zu erzeugen,
• eine Bewegungseinheit (50), die dazu eingerichtet ist, eine Bewegung der von der Laserstrahlungsquelle (10) erzeugten Laserstrahlung auf einem im Aufnahmebereich (22) angeordneten Werkstücks (24) zu bewirken, und
**gekennzeichnet durch** :
• eine Steuereinheit (110), die sowohl die Bewegungseinheit (50) als auch die Strahlformungseinheit (30) ansteuert, wobei die Steuereinheit (110) dazu eingerichtet ist, die Laserstrahlung, welche die erste Intensitätsverteilung auf dem Werkstück (24) aufweist, entlang eines ersten Pfads (120) über das Werkstück (24) zu führen, und die Laserstrahlung, welche die zweite Intensitätsverteilung auf dem Werkstück (24) aufweist, entlang eines zweiten, vom ersten Pfad verschiedenen Pfads (130) über das Werkstück (24) zu führen, wobei entlang des ersten Pfads (120) eine größere Fläche des Werkstücks (24) mittels der Laserstrahlung bearbeitet wird als entlang des zweiten Pfads (130), insbesondere die zweite Fläche maximal 10% der ersten Fläche beträgt, bevorzugt weniger als 5% der ersten Fläche und besonders bevorzugt maximal 1 % der ersten Fläche.

2. Vorrichtung gemäß Anspruch 1, **dadurch gekennzeichnet, dass** die Strahlformungseinheit (30) eine Wechseleinheit aufweist, die dazu eingerichtet ist, entweder einen ersten oder einen zweiten Spatial Light Modulator im Strahlengang der Laserstrahlung zwischen Laserstrahlungsquelle (10) und dem Aufnahmebereich (22) anzuordnen, wobei die Spatial Light Modulatoren zur Erzeugung vorbestimmter Intensitätsverteilungen der Laserstrahlung auf dem im Aufnahmebereich (22) angeordneten Werkstück (24) eingerichtet sind, und wobei die vorbestimmten Intensitätsverteilungen voneinander verschieden sind.

3. Vorrichtung gemäß Anspruch 1, **dadurch gekennzeichnet, dass** eine von der Strahlformungseinheit (30) auf dem Werkstück (24) erzeugte Intensitätsverteilung der Laserstrahlung in einer Ebene quer zur Strahlachse mehrere Intensitätsmaxima aufweist.

4. Vorrichtung gemäß Anspruch 1, **dadurch gekennzeichnet, dass** eine von der Strahlformungseinheit (30) auf dem Werkstück (24) erzeugte Intensitätsverteilung in einer Ebene quer zur Strahlachse mehrere Intensitätsmaxima aufweist, die denselben Abstand von der Strahlachse aufweisen, wobei diese Intensitätsmaxima symmetrisch um die Strahlachse verteilt sind.

5. Vorrichtung gemäß Anspruch 1, **dadurch gekennzeichnet, dass** eine von der Strahlformungseinheit (30) auf dem Werkstück (24) erzeugte Intensitätsverteilung zumindest ein linienhaft ausgedehntes Intensitätsmaximum aufweist, welches eine geschlossene Schleife um die Strahlachse ausbildet, wobei die Schleife in einer Ebene quer zur Strahlachse liegt.

6. Vorrichtung gemäß Anspruch 1, **dadurch gekennzeichnet, dass** die von der Strahlformungseinheit (30) auf dem Werkstück (24) erzeugten Intensitätsverteilungen der Laserstrahlung in ihrer Intensitätsverteilung in Strahlrichtung voneinander unterscheiden.

7. Vorrichtung gemäß Anspruch 6, **dadurch gekennzeichnet, dass** die eine von der Strahlformungseinheit (30) auf dem Werkstück (24) erzeugte Intensitätsverteilung der Laserstrahlung eine größere Fokuslänge oder/und Fokuslage aufweist als die andere Intensitätsverteilung.

8. Vorrichtung gemäß Anspruch 1, **dadurch gekennzeichnet, dass** die Laserstrahlung so über das Werkstück (24) geführt wird, dass sich zumindest entlang eines Pfads eine zusammenhängende Bearbeitungsspur ergibt.

9. Vorrichtung nach einem der vorangehenden Ansprüche, **dadurch gekennzeichnet, dass** entlang des ersten Pfads (120) eine erste Fläche des Werkstücks (24) bearbeitet wird und der zweite Pfad (130) randseitig der ersten Fläche verläuft.

10. Vorrichtung gemäß Anspruch 3, **dadurch gekennzeichnet, dass** sich in einer seitlichen Projektion der Intensität auf eine entlang der Strahlachse verlaufende Ebene ein Intensitätsverlauf mit zumindest zwei randseitigen Maxima und zumindest einem, bevorzugt mehreren, dazwischen liegenden Minimum/Minima ergibt, wobei die Intensität im Minimum/in den Minima mindestens 50% der Intensität der Maxima beträgt, bevorzugt mindestens 65% und besonders bevorzugt mindestens 80%.

11. Verfahren zum Bearbeiten eines Werkstücks (24) durch Bestrahlen mittels Laserstrahlung,
a. Anordnen eines Werkstücks (24) in einem Aufnahmebereich (22), welcher dazu vorgesehen ist, ein zu bearbeitendes Werkstück (24) aufzunehmen,
b. Erzeugen von Laserstrahlung mittels einer Laserstrahlungsquelle (10),
**gekennzeichnet durch**:
c. Erzeugen einer ersten Intensitätsverteilung der Laserstrahlung auf dem Werkstück (24) durch lokale Modulation der Laserstrahlung mittels einer Strahlformungseinheit (30) und Bearbeiten des Werkstücks (24) mittels der so geformten Laserstrahlung, wobei die Laserstrahlung auf dem Werkstück (24) bewegt wird, und
d. Erzeugen einer zweiten, von der ersten Intensitätsverteilung verschiedenen Intensitätsverteilung der Laserstrahlung auf dem Werkstück (24) und Bearbeiten des Werkstücks (24) mittels der so geformten Laserstrahlung, wobei die Laserstrahlung auf dem Werkstück (24) bewegt wird,
wobei beim Bearbeiten des Werkstücks (24) mittels der Laserstrahlung, die die erste Intensitätsverteilung auf dem Werkstück (24) aufweist, die Laserstrahlung entlang eines ersten Pfades (120) über das Werkstück (24) geführt wird, und beim Bearbeiten des Werkstücks (24) mittels der Laserstrahlung, die die zweite Intensitätsverteilung auf dem Werkstück (24) aufweist, die Laserstrahlung entlang eines zweiten, vom ersten Pfad (120) verschiedenen Pfads (130) über das Werkstück (24) geführt wird, wobei entlang des ersten Pfads (120) eine größere Fläche des Werkstücks (24) mittels der Laserstrahlung bearbeitet wird als entlang des zweiten Pfads (130), wobei insbesondere die zweite Fläche maximal 10% der ersten Fläche beträgt, bevorzugt weniger als 5% der ersten Fläche und besonders bevorzugt maximal 1% der ersten Fläche.

12. Verfahren nach Anspruch 11, **dadurch gekennzeichnet, dass** eine Vorrichtung gemäß einem der Ansprüche 1 bis 10 eingesetzt wird.

## Claims

1. A device for machining a workpiece (24) by irradiation by means of laser radiation, having the following features:
• a laser radiation source (10),
• an accommodating region (22) for accommodating a workpiece (24) to be machined,
• a beam shaping unit (30), which is inserted into the beam path of the laser radiation generated by the laser radiation source (10) between laser radiation source (10) and accommodating region (22) and is set up to generate at least two different predetermined intensity distributions by means of local modulation of the laser radiation, namely at least one first intensity distribution and a second intensity distribution of the laser radiation on the workpiece (24),
• a movement unit (50) which is set up to effect a movement of the laser radiation generated by the laser radiation source (10) on a workpiece (24) that is arranged in the accommodating region (22), and
**characterized by**:
• a control unit (110) which activates both the movement unit (50) and the beam shaping unit (30), wherein the control unit (110) is set up to guide the laser radiation which has the first intensity distribution on the workpiece (24) over the workpiece (24) along a first path (120), and the laser radiation which has the second intensity distribution on the workpiece (24) over the workpiece (24) along a second path (130) which is different from the first path,
wherein a larger area of the workpiece (24) is machined by means of the laser radiation along the first path (120) than along the second path (130), in particular the second area is at most 10 % of the first area, preferably less than 5 % of the first area and particularly preferably at most 1 % of the first area.

2. The device according to Claim 1, **characterized in that** the beam shaping unit (30) has a changeover unit which is set up to arrange either a first or a second spatial light modulator in the beam path of the laser radiation between the laser radiation source (10) and the accommodating region (22), wherein the spatial light modulators are set up for generating predetermined intensity distributions of the laser radiation on the workpiece (24) which is arranged in the accommodating region (22), and wherein the predetermined intensity distributions are different from one another.

3. The device according to Claim 1, **characterized in that** an intensity distribution of the laser radiation which is created on the workpiece (24) by the beam shaping unit (30) has a plurality of intensity maxima in a plane transverse to the beam axis.

4. The device according to Claim 1, **characterized in that** an intensity distribution which is created on the workpiece (24) by the beam shaping unit (30) has a plurality of intensity maxima in a plane transverse to the beam axis, which have the same distance from the beam axis, wherein these intensity maxima are distributed symmetrically about the beam axis.

5. The device according to Claim 1, **characterized in that** an intensity distribution which is created on the workpiece (24) by the beam shaping unit (30) has at least one intensity maximum which is extended in a linear manner and which forms a closed loop around the beam axis, wherein the loop is located in a plane transverse to the beam axis.

6. The device according to Claim 1, **characterized in that** the intensity distributions of the laser radiation which are created on the workpiece (24) by the beam shaping unit (30) differ from one another in terms of their intensity distribution in the beam direction.

7. The device according to Claim 6, **characterized in that** one intensity distribution of the laser radiation which is created on the workpiece (24) by the beam shaping unit (30) has a larger focal length or/and focal position than the other intensity distribution.

8. The device according to Claim 1, **characterized in that** the laser radiation is guided over the workpiece (24) such that a continuous machining track is created at least along one path.

9. The device according to one of the preceding claims, **characterized in that** a first area of the workpiece (24) is machined along the first path (120) and the second path (130) runs at the edge of the first area.

10. The device according to Claim 3, **characterized in that** in a lateral projection of the intensity onto a plane running along the beam axis, an intensity distribution is created having at least two maxima at the edge and at least one minimum/preferably a plurality of minima lying therebetween, wherein the intensity at the minimum/at the minima is at least 50 %, preferably at least 65 % and particularly preferably at least 80 % of the intensity of the maxima.

11. A method for machining a workpiece (24) by irradiation by means of laser radiation,
a. arranging a workpiece (24) in an accommodating region (22) which is provided to accommodate a workpiece (24) that is to be machined,
b. generating laser radiation by means of a laser radiation source (10),
**characterized by**:
c. creating a first intensity distribution of the laser radiation on the workpiece (24) by local modulation of the laser radiation by means of a beam shaping unit (30) and machining the workpiece (24) by means of the thus shaped laser radiation, wherein the laser radiation is moved on the workpiece (24), and
d. creating a second intensity distribution of the laser radiation, which is different from the first intensity distribution, on the workpiece (24) and machining the workpiece (24) by means of the thus shaped laser radiation, wherein the laser radiation is moved on the workpiece (24),
wherein when machining the workpiece (24) by means of the laser radiation which has the first intensity distribution on the workpiece (24), the laser radiation is guided over the workpiece (24) along a first path (120), and when machining the workpiece (24) by means of the laser radiation which has the second intensity distribution on the workpiece (24), the laser radiation is guided over the workpiece (24) along a second path (130) which is different from the first path (120),
wherein a larger area of the workpiece (24) is machined by means of the laser radiation along the first path (120) than along the second path (130), wherein in particular the second area is at most 10 % of the first area, preferably less than 5 % of the first area and particularly preferably at most 1 % of the first area.

12. The method according to Claim 11, **characterized in that** a device according to one of Claims 1 to 10 is used.

## Revendications

1. Dispositif, destiné à usiner une pièce d'oeuvre (24) par irradiation au faisceau laser, comportant les attributs suivants :
• une source de faisceau laser (10),
• une zone de réception (22), destinée à recevoir une pièce d'oeuvre (24) qui doit être usinée,
• une unité formatrice de faisceau (30), qui est insérée entre la source de faisceau laser (10) et la zone de réception (22) dans la trajectoire de faisceau du faisceau laser généré par la source de faisceau laser (10) et qui est configurée pour, par modulation locale du faisceau laser, générer au moins deux distributions d'intensité différentes prédéfinies, à savoir au moins une première distribution d'intensité et une deuxième distribution d'intensité du faisceau laser sur la pièce d'oeuvre (24),
• une unité de déplacement (50), qui est conçue pour provoquer un déplacement du faisceau laser généré par la source de faisceau laser (10) sur une pièce d'oeuvre (24) placée dans la zone de réception (22),
et **caractérisé par** :
• une unité de commande (110), qui active aussi bien l'unité de déplacement (50) qu'également l'unité formatrice de faisceau (30), l'unité de commande (110) étant conçue pour guider le faisceau laser, lequel présente la première distribution d'intensité sur la pièce d'oeuvre (24) le long d'un premier chemin (120) au-dessus de la pièce d'oeuvre (24) et le faisceau laser, lequel présente la deuxième distribution d'intensité sur la pièce d'oeuvre (24) le long d'un deuxième chemin (130), différent du premier chemin au-dessus de la pièce d'oeuvre (24),
le long du premier chemin (120) étant usinée au moyen du faisceau laser une surface plus importante de la pièce d'oeuvre (24) que le long du deuxième chemin (130), notamment la deuxième surface s'élevant au maximum à 10 % de la première surface, de préférence à moins de 5% de la première surface et de manière particulièrement préférentielle au maximum à 1 % de la première surface.

2. Dispositif selon la revendication 1, **caractérisé en ce que** l'unité formatrice de faisceau (30) comporte une unité interchangeable qui est configurée pour placer soit un premier et un deuxième modulateurs spatiaux de lumière dans la trajectoire de faisceau du faisceau laser, entre la source de faisceau laser (10) et la zone de réception (22), les modulateurs spatiaux de lumière étant configurés pour générer différentes distributions d'intensité prédéfinies du faisceau laser sur la pièce d'oeuvre (24) placée dans la zone de réception (22) et les distributions d'intensité prédéfinies étant différentes les unes des autres.

3. Dispositif selon la revendication 1, **caractérisé en ce qu'**une distribution d'intensité du faisceau laser générée par l'unité formatrice de faisceau (30) sur la pièce d'oeuvre (24) comporte dans un plan transversal à l'axe du faisceau plusieurs maxima d'intensité.

4. Dispositif selon la revendication 1, **caractérisé en ce qu'**une distribution d'intensité générée par l'unité formatrice de faisceau (30) sur la pièce d'oeuvre (24) dans un plan transversal à l'axe du faisceau présente plusieurs maxima d'intensité, qui présentent par rapport à l'axe du faisceau le même écart par rapport à l'axe du faisceau, lesdits maxima d'intensité étant distribués de manière symétrique autour de l'axe du faisceau.

5. Dispositif selon la revendication 1, **caractérisé en ce qu'**une distribution d'intensité générée par l'unité formatrice de faisceau (30) sur la pièce d'oeuvre (24) présente au moins un maximum d'intensité étendu en forme linéaire, lequel constitue une boucle fermée autour de l'axe du faisceau, la boucle se situant dans un plan transversal à l'axe du faisceau.

6. Dispositif selon la revendication 1, **caractérisé en ce que** les distributions d'intensité du faisceau laser générées par l'unité formatrice de faisceau (30) sur la pièce d'oeuvre (24) se différencient les unes des autres par leur distribution d'intensité dans la direction du faisceau.

7. Dispositif selon la revendication 6, **caractérisé en ce que** l'une distribution d'intensité du faisceau laser générée par l'unité formatrice de faisceau (30) sur la pièce d'oeuvre (24) fait preuve d'une longueur focale et / ou d'une position focale supérieure à celle de l'autre distribution d'intensité.

8. Dispositif selon la revendication 1, **caractérisé en ce que** le faisceau laser est guidé au-dessus de la pièce d'oeuvre (24) de sorte à provoquer au moins le long d'un chemin une trace d'usinage cohérente.

9. Dispositif selon l'une quelconque des revendications précédentes, **caractérisé en ce que** le long du premier chemin (120) est usinée une première surface de la pièce d'oeuvre (24) et **en ce que** le deuxième chemin (130) s'écoule en marge de la première surface.

10. Dispositif selon la revendication 3, **caractérisé en ce que** dans une projection latérale de l'intensité, sur un plan s'écoulant le long de l'axe du faisceau, résulte une courbe d'intensité avec au moins deux maxima marginaux et au moins un, de préférence plusieurs minimum / minima intercalés, l'intensité dans le minimum /dans les minima s'élevant à au moins 50 %, de préférence à au moins 65 % et de manière particulièrement préférentielle à au moins 80% de l'intensité des maxima.

11. Procédé, destiné à usiner une pièce d'oeuvre (24) par irradiation au moyen d'un faisceau laser, par
a. placement d'une pièce d'oeuvre (24) dans une zone de réception (22), laquelle est prévue pour recevoir une pièce d'oeuvre (24) qui doit être usinée,
b. génération d'un faisceau laser au moyen d'une source de faisceau laser (10),
**caractérisé par** :
c. la génération d'une première distribution d'intensité du faisceau laser sur la pièce d'oeuvre (24) par modulation du faisceau laser au moyen d'une unité formatrice de faisceau (30) et l'usinage de la pièce d'oeuvre (24) au moyen du faisceau laser ainsi formé, le faisceau laser étant déplacé sur la pièce d'oeuvre (24) et
d. la génération d'une deuxième distribution d'intensité du faisceau laser, différente de la première distribution d'intensité sur la pièce d'oeuvre (24) et l'usinage de la pièce d'oeuvre (24) au moyen du faisceau laser ainsi formé, le faisceau laser étant déplacé sur la pièce d'oeuvre (24),
lors de l'usinage de la pièce d'oeuvre (24) au moyen du faisceau laser, qui présente la première distribution d'intensité sur la pièce d'oeuvre (24) le faisceau laser étant guidé le long d'un premier chemin (120) au-dessus la pièce d'oeuvre (24) et lors de l'usinage de la pièce d'oeuvre (24) au moyen du faisceau laser qui présente la deuxième distribution d'intensité sur la pièce d'oeuvre (24), le faisceau laser étant guidé le long d'un deuxième chemin (130) différent du premier chemin (120) au-dessus de la pièce d'oeuvre (24),
le long du premier chemin (120) étant usinée au moyen du faisceau laser une surface de la pièce d'oeuvre (24) supérieure à celle usinée le long du deuxième chemin (130), notamment la deuxième surface s'élevant au maximum à 10 % de la première surface, de préférence à moins de 5 % de la première surface et de manière particulièrement préférentielle, au maximum à 1 % de la première surface.

12. Procédé selon la revendication 11, **caractérisé en ce que** l'on met en oeuvre un dispositif selon l'une quelconque des revendications 1 à 10.
